(19) Europäisches Patentamt
European Patent Office
Office européen des brevets

(11) EP 4 790 632 A1

(12) **EUROPEAN PATENT APPLICATION**
published in accordance with Art. 153(4) EPC

(43) Date of publication:
**12.08.2026 Bulletin 2026/33**

(21) Application number: **24889091.5**

(22) Date of filing: **05.11.2024**

(51) International Patent Classification (IPC):
***G06T 1/20*** *(2006.01)* ***G06T 5/20*** *(2006.01)*
***G06V 10/74*** *(2022.01)* ***G06F 1/3231*** *(2019.01)*
***G06F 1/3212*** *(2019.01)* ***G06F 3/01*** *(2006.01)*
***G06F 3/0487*** *(2013.01)* ***G06T 3/40*** *(2024.01)*
***G06T 11/60*** *(2026.01)*

(52) Cooperative Patent Classification (CPC):
**G06T 11/60; G06F 1/3212; G06F 1/3231; G06F 3/01; G06F 3/0487; G06T 1/20; G06T 3/40; G06T 5/20; G06V 10/74**

(86) International application number:
**PCT/KR2024/017309**

(87) International publication number:
**WO 2025/100903 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.11.2023 KR 20230151880**
**15.12.2023 KR 20230183470**

(71) Applicant: **Samsung Electronics Co., Ltd.**
**Suwon-si, Gyeonggi-do 16677 (KR)**

(72) Inventors:
- **KIM, Hojin**
  **Suwon-si, Gyeonggi-do 16677 (KR)**
- **ROH, Wonjun**
  **Suwon-si, Gyeonggi-do 16677 (KR)**
- **CHO, Jaehun**
  **Suwon-si, Gyeonggi-do 16677 (KR)**
- **HEO, Changryong**
  **Suwon-si, Gyeonggi-do 16677 (KR)**
- **KIM, Mooyoung**
  **Suwon-si, Gyeonggi-do 16677 (KR)**
- **NA, Boyoun**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND IMAGE PROCESSING METHOD USING SAME**

(57) According to one embodiment of the present disclosure, an electronic device may comprise a processor and a memory for storing instructions. According to one embodiment, when executed by the processor, the instructions can cause the electronic device to: identify the similarity between a plurality of pixels that constitute an image; control an artificial intelligence model driving module on the basis of the identified similarity between the plurality of pixels so as to apply a plurality of filters related to image quality improvement of the image to at least some pixels that satisfy a designated similarity condition from among the plurality of pixels; and control the artificial intelligence model driving module so as to limit application of the plurality of filters to at least some other pixels that do not satisfy the designated similarity condition from among the plurality of pixels. In addition to the various embodiments disclosed in the present document, other various embodiments are possible.



Processed by Luminess, 75001 PARIS (FR)

(Cont. next page)

FIG. 3

START
IDENTIFY SIMILARITY BETWEEN PLURALITY OF PIXELS INCLUDED IN IMAGE
305
CONTROL ARTIFICIAL INTELLIGENCE MODEL DRIVING MODULE SO AS TO APPLY PLURALITY OF FILTERS RELATED TO IMAGE QUALITY IMPROVEMENT TO AT LEAST SOME PIXELS SATISFYING SPECIFIED SIMILARITY CONDITION AMONG PLURALITY OF PIXELS, BASED ON IDENTIFIED SIMILARITY BETWEEN PLURALITY OF PIXELS
310
CONTROL ARTIFICIAL INTELLIGENCE MODEL DRIVING MODULE SO AS TO RESTRICT APPLYING PLURALITY OF FILTERS TO AT LEAST SOME OTHER PIXELS NOT SATISFYING SPECIFIED SIMILARITY CONDITION AMONG PLURALITY OF PIXELS
315
END

## Description

Embodiments of the disclosure relate to an electronic device and an image processing method using the same.

[Background Art]

Electronic devices are gradually becoming thinner, and are being improved to strengthen design aspects and to differentiate their functional elements. Electronic devices are gradually being developed in various shapes, moving away from uniform rectangular shapes. For example, recently, electronic devices having a large display (e.g., a foldable display, a rollable display, or a stretchable display) have been widely distributed.

In a case in which an image is output through a large screen display, the electronic device may up-scale an image with a low frame resolution to have a higher frame (e.g., target frame) resolution and then output the same through the display.

The above-described information may be provided as related art for the purpose of assisting in understanding the disclosure. None of the above descriptions is intended to suggest or determine that the same is prior art applicable to the disclosure.

[Disclosure of Invention]

[Technical Problem]

In a case in which an upscaled image is output on a large display, only a resolution of an image is upscaled and thus, a quality of the upscaled image may be low.

Based on a similarity between a plurality of pixels included in an image, an electronic device according to an embodiment of the disclosure may perform image processing on at least some pixels satisfying a specified similarity condition among the plurality of pixels, and may restrict performing image processing on at least some other pixels not satisfy the similarity condition.

An electronic device according to an embodiment of the disclosure may include an artificial intelligence model trained for image processing related to image quality improvement. The electronic device may partially activate a plurality of filters related to image quality improvement, by using an artificial intelligence model, according to state information of the electronic device. The electronic device may perform image processing on at least some pixels satisfying a specified similarity condition among a plurality of pixels included in an image by using the partially activated filters.

[Solution to Problem]

According to an embodiment of the disclosure, an electronic device may include a processor and a memory storing instructions. According to an embodiment, the instructions, when executed by the processor, may cause the electronic device to identify a similarity between a plurality of pixels included in an image. According to an embodiment, the instructions, when executed by the processor, may cause the electronic device to control an artificial intelligence model driving module to apply a plurality of filters related to image quality improvement to at least some pixels satisfying a specified similarity condition among the plurality of pixels, based on the identified similarity between the plurality of pixels. According to an embodiment, the instructions, when executed by the processor, may cause the electronic device to control the artificial intelligence model driving module to restrict applying the plurality of filters to at least some other pixels not satisfying the specified similarity condition among the plurality of pixels.

According to an embodiment of the disclosure, an image processing method of an electronic device may include an operation of identifying a similarity between a plurality of pixels included in an image. According to an embodiment, the image processing method of the electronic device may include an operation of controlling the artificial intelligence model driving module so as to apply a plurality of filters related to image quality improvement to at least some pixels satisfying a specified similarity condition among the plurality of pixels, based on the identified similarity between the plurality of pixels. According to an embodiment, the image processing method of the electronic device may include an operation of controlling the artificial intelligence model driving module to restrict applying the plurality of filters to the at least some other pixels not satisfying the specified similarity condition among the plurality of pixels.

According to an embodiment of the disclosure, a non-transitory computer-readable storage medium (or a computer program product) storing one or more programs is described. The one or more programs according to an embodiment may include an instruction for identifying a similarity between a plurality of pixels included in an image when executed by a processor of an electronic device. The one or more programs according to an embodiment may include an instruction that, when executed by the processor of the electronic device, controls an artificial intelligence model driving module to apply a plurality of filters related to image quality improvement to at least some pixels satisfying a specified

similarity condition among the plurality of pixels, based on the identified similarity between the plurality of pixels. The one or more programs according to an embodiment may include an instruction that, when executed by the processor of the electronic device, control the artificial intelligence model driving module to restrict applying the plurality of filters to at least some other pixels not satisfying the specified similarity condition among the plurality of pixels.

[Advantageous Effects of Invention]

An electronic device according to an embodiment of the disclosure may not only output a clear image even on a large display, but also reduce current consumption by performing image processing only on at least some pixels that need image processing among a plurality of pixels included in an image.

An electronic device according to an embodiment of the disclosure may perform image processing on at least some pixels satisfying a specified similarity condition among a plurality of pixels included in an image, using partially activated filters among a plurality of filters related to image quality improvement based on state information of the electronic device using an artificial intelligence model, thereby outputting a high-quality image in which a predetermined region (e.g., a dot region and/or an edge region) in the image is clearly displayed.

[Brief Description of Drawings]

FIG. 1 is a block diagram of an electronic device in a network environment according to an embodiment of the disclosure.

FIG. 2 is a block diagram of an electronic device according to an embodiment of the disclosure.

FIG. 3 is a flowchart illustrating a method of performing image processing according to an embodiment of the disclosure.

FIG. 4 is a diagram illustrating a method of performing image processing according to an embodiment of the disclosure.

FIG. 5 is a diagram illustrating a method of identifying a similarity between a plurality of pixels included in an image according to an embodiment of the disclosure.

FIG. 6 is a diagram illustrating a method of performing image processing according to an embodiment of the disclosure.

FIG. 7 is a flowchart illustrating a method of selecting at least some filters to be used for image processing, based on state information of an electronic device, according to an embodiment of the disclosure.

FIG. 8 is a diagram illustrating a method of selecting at least some filters to be used for image processing, based on state information of an electronic device, according to an embodiment of the disclosure.

FIG. 9 is a flowchart illustrating a method of selecting at least some filters to be used for image processing, based on state information of an electronic device, according to an embodiment of the disclosure.

FIG. 10 is a flowchart illustrating a method of selecting at least some filters to be used for image processing, based on state information of an electronic device, according to an embodiment of the disclosure.

FIG. 11 is a flowchart illustrating a method of selecting at least some filters to be used for image processing, based on state information of an electronic device, according to an embodiment of the disclosure.

FIG. 12 is a flowchart illustrating a method of selecting at least some filters to be used for image processing, based on state information of an electronic device, according to an embodiment of the disclosure.

[Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

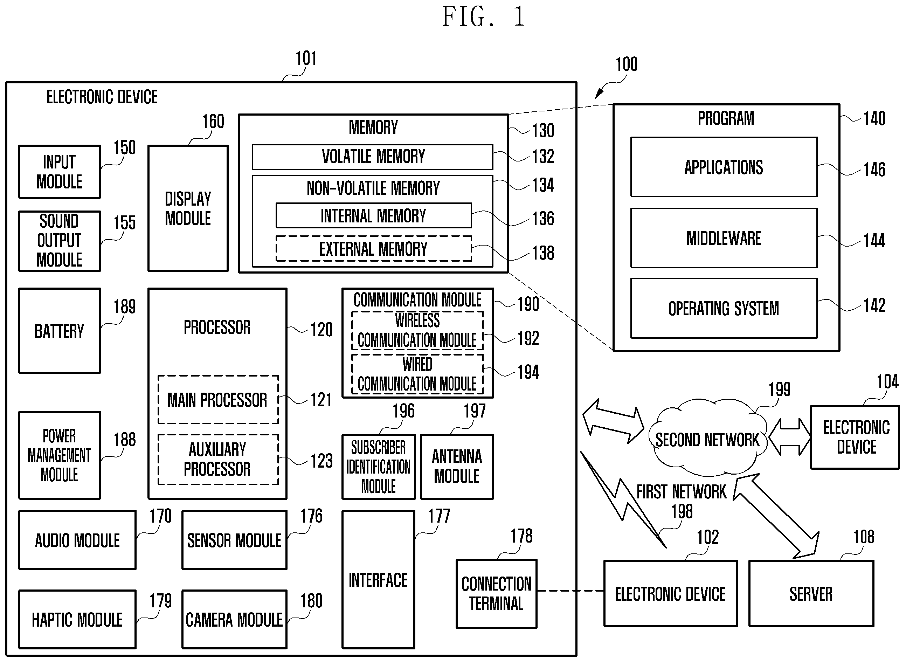

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to

an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g.,

wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external

electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

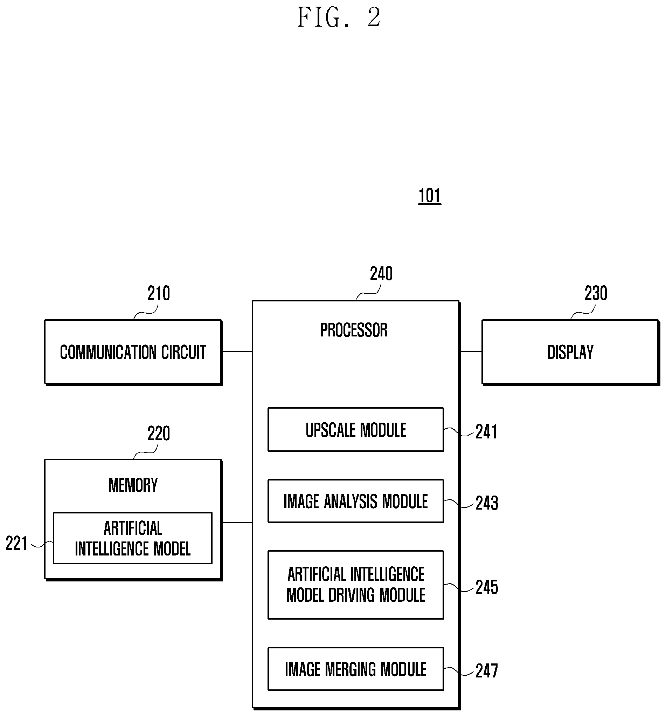

FIG. 2 is a block diagram of the electronic device 101 according to an embodiment of the disclosure.

Referring to FIG. 2, the electronic device 101 (e.g., the electronic device 101 in FIG. 1) may include a communication circuit 210 (e.g., the communication module 190 in FIG. 1), a memory 220 (e.g., the memory 130 in FIG. 1), a display 230 (e.g., the display module 160 in FIG. 1), and/or a processor 240 (e.g., the processor 120 in FIG. 1).

According to an embodiment of the disclosure, the communication circuit 210 (e.g., the communication module 190 in FIG. 1) may control a communication connection between the electronic device 101 and at least one external electronic device (e.g., the electronic device 102, the electronic device 104 in FIG. 1) (and/or a server (e.g., the server 108 in FIG. 1)) under the control of the processor 240.

According to an embodiment of the disclosure, the memory 220 (e.g., the memory 130 in FIG. 1) may perform a function of storing a program (e.g., the program 140 in FIG. 1) for processing and controlling the processor 240 of the electronic device 101, an operating system (OS) (e.g., the operating system 142 in FIG. 1), various applications, and/or input/output data, and may store a program for controlling the overall operation of the electronic device 101. The memory 220 may store various configuration information required when the electronic device 101 processes functions associated with various embodiments of the disclosure.

In an embodiment, the memory 220 may store instructions for upscaling an image with a first resolution (e.g., low resolution) to have a second resolution (e.g., target resolution or high resolution) higher than the first resolution. The memory 220 may store instructions for identifying a similarity between a plurality of pixels included in an image, and detecting (or analyzing) an edge region in the image. The memory 220 may store instructions for performing image processing on at least some pixels satisfying a specified similarity condition among the plurality of pixels. The memory 220 may store instructions for restricting performance of image processing on at least some other pixels not satisfying the specified similarity condition among the plurality of pixels. The memory 220 may store instructions for selecting at least

some filters to be used for image processing among a plurality of filters related to image quality improvement, based on the state information of the electronic device 101. The memory 220 may store instructions for performing image processing on at least some pixels satisfying the specified similarity condition among the plurality of pixels, using the selected at least some filters.

In an embodiment, the memory 220 may include an artificial intelligence (AI) model 221. In an embodiment, operation based on the artificial intelligence model 221 may be performed in the processor 240.

According to an embodiment of the disclosure, the display 230 (e.g., the display module 160 in FIG. 1) may display an image under the control of the processor 240, and may be implemented by any one of a liquid crystal display (LCD), a light-emitting diode (LED) display, a micro LED (μLED) display, an organic light-emitting diode (OLED) display, an active matrix organic light-emitting diode (AMOLED) display, a micro electro mechanical systems (MEMS) display, an electronic paper display, a flexible display, a foldable display, or a rollable display. However, this is not limited thereto. However, this is not limited thereto.

In an embodiment, the display 230 may display an image that is image-processed by the processor 240 under the control of the processor 240.

According to an embodiment of the disclosure, the processor 240 may include, for example, a micro controller unit (MCU), and may control a plurality of hardware components connected to the processor 240 by driving an operating system (OS) or an embedded software program. The processor 240 may control a plurality of hardware components, for example, according to instructions (e.g., the program 140 in FIG. 1) stored in the memory 220.

In an embodiment, the processor 240 may include at least one component (or module) for an operation according to embodiments of the disclosure. For example, the processor 240 may include at least one functional unit, such as an upscale module 241, an image analysis module 243, an artificial intelligence model driving module 245, and/or an image merging module 247. According to an embodiment, at least some of the functional units may be implemented as hardware modules (e.g., circuitry) included in the processor 240 and/or as software including one or more instructions executable by the processor 240. For example, operations performed by the processor 240 may be executed by instructions which are stored in the memory 220 and, when executed, cause the processor 240 to operate.

In an embodiment, the upscale module 241 of the processor 240 may upscale an image with a first resolution (e.g., low resolution) to have a second resolution (e.g., target resolution or high resolution) higher than the first resolution. The image analysis module 243 of the processor 240 may identify a similarity between a plurality of pixels included in the image upscaled by the upscale module 241. The operation of identifying the similarity between the plurality of pixels included in the image may be an operation of detecting (or analyzing) an edge region in the image. For example, the image analysis module 243 of the processor 240 may detect (or analyze) an edge region in the image by using a designated filter. The artificial intelligence model driving module 245 of the processor 240 may perform image processing on at least some pixels satisfying a specified similarity condition among the plurality of pixels, based on the similarity between the plurality of pixels identified by the image analysis module 243. For example, the artificial intelligence model driving module 245 may apply a plurality of filters (e.g., a plurality of convolution layers) related to image quality improvement to the at least some pixels satisfying the specified similarity condition among the plurality of pixels. The artificial intelligence model driving module 245 of the processor 240 may restrict performing image processing on at least some other pixels not satisfying the specified similarity condition among the plurality of pixels. For example, the artificial intelligence model driving module 245 may not apply (e.g., bypass) a plurality of filters (e.g., a plurality of convolution layers) related to image quality improvement to at least some pixels satisfying a specified similarity condition among the plurality of pixels. In an embodiment, at least some pixels satisfying the specified similarity condition among the plurality of pixels may be pixels corresponding (or belonging) to an edge region. At least some pixels not satisfying the specified similarity condition among the plurality of pixels may be pixels not corresponding (or belonging) to an edge region.

In an embodiment, the artificial intelligence model driving module 245 of the processor 240 may select at least some filters to be used for image processing among the plurality of filters related to image quality improvement, based on state information of the electronic device 101. In an embodiment, the state information of the electronic device 101 may include information related to a remaining capacity of a battery (e.g., the battery 189 in FIG. 1) of the electronic device 101, information related to a characteristic (e.g., a display characteristic (e.g., resolution)) of an application currently displayed (or requested to be displayed (or output)) on the display 230 of the electronic device 101, information related to the operating state (e.g., power saving state (or low power state)) of the electronic device 101, information related to detection of a gaze of a user of the electronic device 101, and/or information related to detection of a user input.

In an embodiment, the artificial intelligence model driving module 245 of the processor 240 may select a first number of filters among the plurality of filters related to image quality improvement, when the remaining capacity of the battery 189 of the electronic device 101 is identified as being less than or equal to a specified capacity, based on the information related to the remaining capacity of the battery 189. However, this is not limited thereto. For example, when the application is identified as an application that does not require high image quality based on the information related to the characteristic of the application, the artificial intelligence model driving module 245 of the processor 240 may select the first number of filters among the plurality of filters related to image quality improvement. As another example, when the

electronic device 101 is identified as operating in a power saving state (or low power state) based on the information related to the operating state of the electronic device 101, the artificial intelligence model driving module 245 of the processor 240 may select the first number of filters among the plurality of filters related to image quality improvement. As another example, when it is identified that a state in which the user's gaze is not detected exceeds a specified time, based on the information related to detection of the gaze of the user of the electronic device 101, the artificial intelligence model driving module 245 of the processor 240 may select the first number of filters among the plurality of filters related to image quality improvement. As another example, when a screen scroll speed is identified as exceeding a specified speed, based on the information related to the detection of the user input, the artificial intelligence model driving module 245 of the processor 240 may select the first number of filters among the plurality of filters related to image quality improvement.

In an embodiment, when the remaining capacity of the battery 189 of the electronic device 101 is identified as exceeding a specified capacity, based on the information related to the remaining capacity of the battery 189, the artificial intelligence model driving module 245 of the processor 240 may select a second number of filters among the plurality of filters related to image quality improvement. However, this is not limited thereto. For example, when the application is identified as an application requiring high image quality based on the information related to the characteristic of the application, the artificial intelligence model driving module 245 of the processor 240 may select the second number of filters among the plurality of filters related to image quality enhancement. As another example, when it is identified that the electronic device 101 does not operate in a power saving state (or low power state) based on the information related to the operating state of the electronic device 101, the artificial intelligence model driving module 245 of the processor 240 may select the second number of filters among the plurality of filters related to image quality improvement. As another example, when it is identified that a state in which the user's gaze is not detected is less than or equal to a specified time, based on the information related to detection of the gaze of the user of the electronic device 101, the artificial intelligence model driving module 245 of the processor 240 may select the second number of filters among the plurality of filters related to image quality improvement. As another example, when it is identified that a screen scroll speed is less than a specified speed, based on the information related to detection of the user input, the artificial intelligence model driving module 245 of the processor 240 may select the second number of filters among the plurality of filters related to image quality improvement. In an embodiment, the second number may be greater than the first number, or equal to the number of the plurality of filters.

In an embodiment, the artificial intelligence model driving module 245 of the processor 240 may perform image processing on at least some pixels satisfying a specified similarity condition among the plurality of pixels, by using the selected first number of filters or the second number of filters (e.g., applying the selected first number of filters or the second number of filters to at least some pixels satisfying the specified similarity condition among the plurality of pixels).

In an embodiment, the image merging module 247 of the processor 240 may assign a weight value to a feature map (e.g., a feature map based on at least some pixels to which a plurality of filters is applied among the pixels and at least some other pixels to which the plurality of filters is not applied among the pixels) generated through the artificial intelligence model driving module 245. The image merging module 247 of the processor 240 may merge the feature map to which the weight value is assigned and the upscaled image to generate a second image. The processor 240 may output (or display) the generated second image on the display 230.

The electronic device 101 according to an embodiment of the disclosure may include the processor 240 and the memory 220 storing instructions. The instructions according to an embodiment, when executed by the processor 240, may cause the electronic device 101 to identify a similarity between a plurality of pixels included in an image. The instructions according to an embodiment, when executed by the processor 240, may cause the electronic device 101 to control the artificial intelligence model driving module 245 to apply a plurality of filters related to image quality improvement to at least some pixels satisfying a specified similarity condition among the plurality of pixels, based on the identified similarity between the plurality of pixels included in the image. The instructions according to an embodiment, when executed by the processor 240, may cause the electronic device 101 to control the artificial intelligence model driving module 245 so as to restrict applying the plurality of filters to at least some other pixels not satisfying the specified similarity condition among the plurality of pixels included in the image.

In an embodiment, at least some pixels satisfying the specified similarity condition among the plurality of pixels may be pixels corresponding to an edge region. Among the plurality of pixels according to an embodiment, at least some other pixels not satisfying the specified similarity condition may be pixels not corresponding to an edge region.

The plurality of filters according to an embodiment may include a plurality of first filters and a plurality of second filters. The plurality of first filters according to an embodiment may include filters related to image operation. The plurality of second filters according to an embodiment may include filters are related to image quality.

The instructions according to an embodiment, when executed by the processor 240, may cause the electronic device 101 to select at least some filters from among the plurality of filters, based on state information of the electronic device 101. The instructions according to an embodiment, when executed by the processor 240, may cause the electronic device 101 to apply the selected at least some filters to at least some pixels satisfying the specified similarity condition among the plurality of pixels.

The state information of the electronic device 101 according to an embodiment may include at least one of

information related to a remaining capacity of the battery 189 of the electronic device 101, information related to a characteristic of an application displayed on the display 230, information related to an operating state of the electronic device 101, information related to detection of a gaze of the user of the electronic device 101, and information related to detection of a user input.

The instructions according to an embodiment, when executed by the processor 240, may cause the electronic device 101 to identify whether the state information of the electronic device 101 satisfies a specified condition. The instructions according to an embodiment, when executed by the processor 240, may cause the electronic device 101 to control the artificial intelligence model driving module 245 so as to select a first number of filters among the plurality of filters and apply the selected first number of filters to at least some pixels satisfying the specified similarity condition among the plurality of pixels when that state information of the electronic device 101 satisfies the specified condition. The instructions according to an embodiment, when executed by the processor 240, may cause the electronic device 101 to control the artificial intelligence model driving module 245 so as to restrict applying the plurality of filters to the at least some other pixels not satisfying the specified similarity condition among the plurality of pixels when the state information of the electronic device 101 satisfies the specified condition. The instructions according to an embodiment, when executed by the processor 240, may cause the electronic device 101 to select a second number of filters from among the plurality of filters when the state information of the electronic device 101 does not satisfy the specified condition. The instructions according to an embodiment, when executed by the processor 240, may cause the electronic device 101 to control the artificial intelligence model driving module 245 so as to apply the selected second number of filters to at least some pixels satisfying the specified similarity condition among the plurality of pixels.

The case in which the state information of the electronic device 101 according to an embodiment satisfies the specified condition may include at least one of the following: a case in which the remaining capacity of the battery 189 of the electronic device 101 is identified as being less than or equal to a specified capacity, based on the information related to the remaining capacity of the battery 189; a case in which an application is identified as an application that does not require high image quality, based on the information related to the characteristic of the application; a case in which the electronic device 101 is identified as operating in a power saving state, based on the information related to the operating state of the electronic device 101; a case where a state in which the user’s gaze is detected is identified as being less than or equal to a specified time, based on the information related to detection of the gaze of the user of the electronic device 101; or a case in which a screen scroll speed is identified as exceeding a specified speed, based on the information related to the detection of the user input.

The case in which the state information of the electronic device 101 according to an embodiment does not satisfy the specified condition may include at least one of the following: a case in which the remaining capacity of the battery 189 is identified as exceeding the specified capacity, based on the information related to the remaining capacity of the battery 189 of the electronic device 101; a case in which the application is identified as an application that requires high image quality, based on the information related to the characteristic of the application; a case in which the electronic device 101 is identified as not operating in a power saving state, based on the information related to the operating state of the electronic device 101; a case where a state in which the user’s gaze is detected is identified as exceeding the specified time, based on the information related to detection of the gaze of the user of the electronic device 101; and a case in which a screen scroll speed is identified as being less than or equal to the specified speed, based on the information related to detection of the user input.

The instructions according to an embodiment, when executed by the processor 240, may cause the electronic device 101 to detect an edge region in a reduced or enlarged screen when a user input for reducing or enlarging a screen is detected, based on the information related to detection of the user input. The instructions according to an embodiment, when executed by the processor 240, may cause the electronic device 101 to select a first number of filters from among the plurality of filters when a ratio of the detected edge region does not exceed a specified ratio, and apply the selected first number of filters to at least some pixels satisfying the specified similarity condition among the plurality of pixels. The instructions according to an embodiment, when executed by the processor 240, may cause the electronic device 101 to select a second number of filters from the plurality of filters when a ratio of the detected edge region exceeds the specified ratio, and apply the selected second number of filters to at least some pixels satisfying the specified similarity condition among the plurality of pixels.

The second number according to an embodiment may be larger than the first number, or equal to the number of plurality of filters.

The electronic device 101 according to an embodiment may further include the display 230. An image according to an embodiment may include an upscaled image. The instructions according to an embodiment, when executed by the processor 240, may cause the electronic device 101 to merge the upscaled image and a feature map based on the at least some pixels to which the plurality of filters is applied among the pixels and the at least some other pixels to which application of the plurality of filters is restricted, so as to generate a second image. The instructions according to an embodiment, when executed by the processor 240, may cause the electronic device 101 to display the generated second image on the display 230.

The image according to an embodiment may include an image that is not upscaled. The instructions according to an embodiment, when executed by the processor 240, may cause the electronic device 101 to merge the image and the feature map based on the at least some pixels to which the plurality of filters is applied among the pixels and the at least some other pixels to which application of the plurality of filters is restricted, so as to generate a second image. The instructions according to an embodiment, when executed by the processor 240, may cause the electronic device 101 to upscale the generated second image. The instructions according to an embodiment, when executed by the processor 240, may cause the electronic device 101 to display the upscaled second image on the display 230.

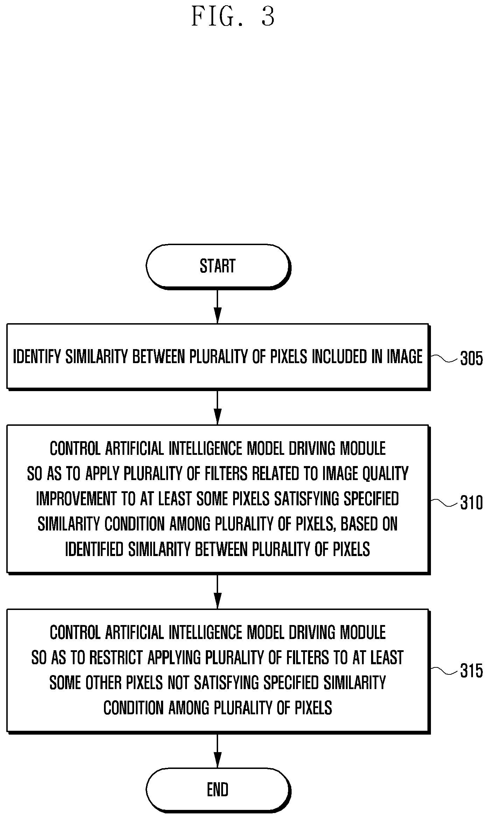

FIG. 3 is a flowchart illustrating a method of performing image processing according to an embodiment of the disclosure.

In the following embodiment, the operations in FIG. 3 may be performed in sequence, but are not necessarily performed in sequence. For example, the order of the operations in FIG. 3 may be changed, and at least two operations may be performed in parallel.

According to an embodiment, operations 305 to 315 in FIG. 3 may be understood as being performed by a processor (e.g., the processor 240 in FIG. 2) of an electronic device (e.g., the electronic device 101 in FIG. 1).

Referring to FIG. 3, in operation 305, the processor 240 may identify a similarity between a plurality of pixels included in an image.

In an embodiment, the image may be an upscaled image. For example, the processor 240 (e.g., the upscale module 241 in FIG. 2) may upscale an image with a first resolution (e.g., low resolution) to have a second resolution (e.g., target resolution or high resolution) higher than the first resolution. For example, the processor 240 (e.g., the upscale module 241) may upscale the image with the first resolution (e.g., low resolution) to have the second resolution (e.g., target or high resolution) higher than the first resolution using an interpolation method such as bilinear, nearest neighbor, and bi-cubic.

This is not limited thereto, and the image may be an image that is not upscaled. In this case, the processor 240 (e.g., the upscale module 241 in FIG. 2) may perform an operation of upscaling an image-processed image after operation 315 described below. Alternatively, the image may be an upscaled image, and the processor 240 (e.g., the up-scaling module 241 in FIG. 2) may perform an operation of up-scaling an image-processed image again after operation 315 described below.

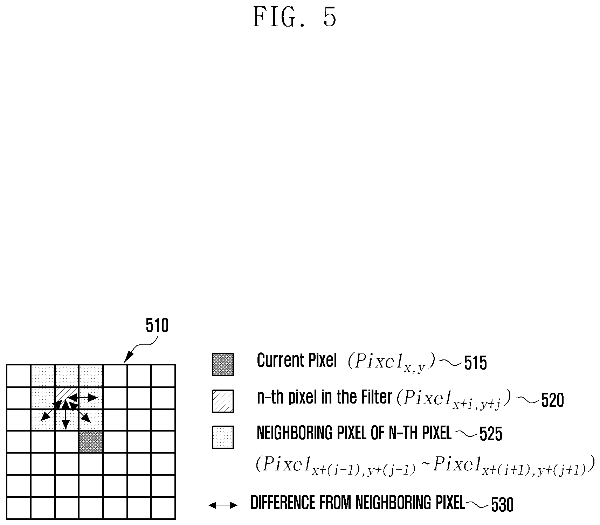

In an embodiment, the processor 240 (e.g., the image analysis module 243 in FIG. 2) may analyze the image and identify the similarity between the plurality of pixels. The operation of identifying the similarity between the plurality of pixels included in the image according to an embodiment may be an operation of detecting (or analyzing) an edge region in the image. For example, the processor 240 (e.g., the image analysis module 243) may detect (or analyze) an edge region in the image using a designated filter. For example, the processor 240 (e.g., the image analysis module 243) may configure one of the plurality of pixels included in the image as a first reference pixel, identify a similarity between a first plurality of pixels adjacent to the first reference pixel, and detect an edge region, based on the similarity. The processor 240 (e.g., the image analysis module 243) may repeatedly perform the operation. For example, the reference pixel may be changed, and the processor 240 (e.g., the image analysis module 243) may identify the similarity between the plurality of first pixels adjacent to the first reference pixel, and then configure a pixel located at a predetermined distance from the first reference pixel as a second reference pixel. The processor 240 (e.g., the image analysis module 243) may identify a similarity between the plurality of second pixels adjacent to the second reference pixel, and detect an edge region, based on the similarity. In this regard, various embodiments will be described with reference to FIG. 5 below.

In an embodiment, the processor 240 (e.g., the artificial intelligence model driving module 245 in FIG. 2) may, in operation 310, apply a plurality of filters (e.g., a plurality of convolution layers) related to image quality improvement included in the artificial intelligence model driving module 245 to at least some pixels satisfying a specified similarity condition among the plurality of pixels, based on the identified similarity between the plurality of pixels. The processor 240 (e.g., the artificial intelligence model driving module 245) may, in operation 315, restrict applying the plurality of filters to at least some other pixels not satisfying the specified similarity condition among the plurality of pixels.

In an embodiment, at least some pixels satisfying the specified similarity condition among the plurality of pixels may be pixels corresponding (or belonging) to an edge region. The at least some other pixels not satisfying the specified similarity condition among the plurality of pixels may be pixels not corresponding (or belonging) to an edge region.

In an embodiment, the processor 240 (e.g., the artificial intelligence model driving module 245 in FIG. 2) may apply the plurality of filters related to image quality improvement to pixels corresponding to an edge region among the plurality of pixels, and may not apply (e.g., bypass) the plurality of filters related to image quality improvement to pixels not corresponding to the edge region.

In an embodiment, although not illustrated, the processor 240 may generate a feature map, based on at least some pixels to which the plurality of filters is applied among the plurality of pixels and at least some other pixels to which the plurality of filters is not applied. The processor 240 (e.g., the image merging module 247 in FIG. 2) may assign a weight value to the feature map generated through the artificial intelligence model driving module 245. For example, the weight value for the feature map for the at least some other pixels to which the plurality of filters is not applied among the plurality of

pixels may be "0." Accordingly, values of the at least some other pixels to which the plurality of filters is not applied among the plurality of pixels may be the same as values of the at least some other pixels of the plurality of pixels included in the image in operation 305. The processor 240 (e.g., the image merging module 247) may merge the feature map with an assigned weight value and the image of operation 305, and output the same as a second image to the display (e.g., the display 230 in FIG. 2). For example, when the image of operation 305 is an upscaled image, the processor 240 (e.g., the image merging module 247) may merge the feature map with the assigned weight value and the upscaled image of operation 305 to generate a second image. The processor 240 may output (or display) the generated second image on the display 230. As another example, when the image of operation 305 is not an upscaled image, the processor 240 (e.g., the image merging module 247) may merge the feature map with the assigned weight value and the non-upscaled image of operation 305 to generate a second image. The processor 240 (e.g., the upscale module 241) may upscale the generated second image. The processor 240 may output (or display) the upscaled second image to the display 230.

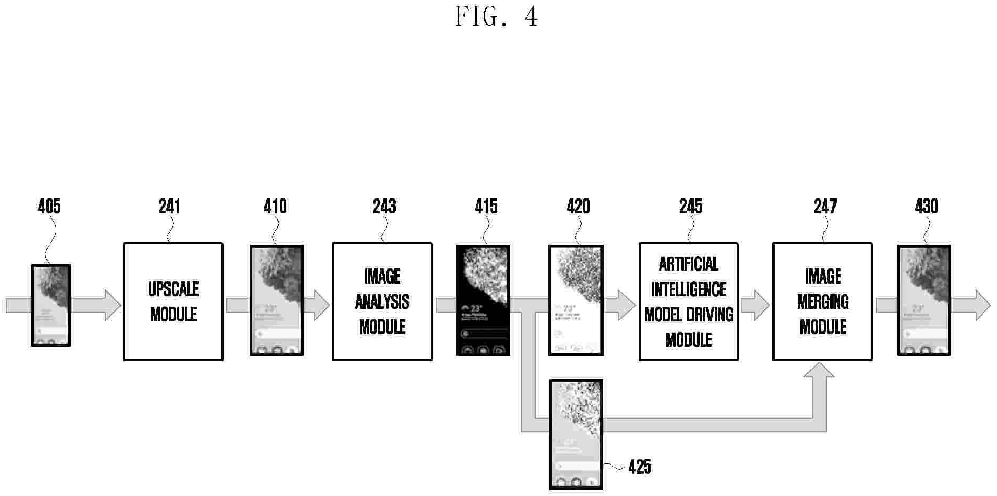

FIG. 4 is a diagram illustrating a method of performing image processing according to an embodiment of the disclosure.

Referring to FIG. 4, a processor (e.g., the processor 240 in FIG. 2) of an electronic device (e.g., the electronic device 101 in FIG. 1) may include the upscale module 241, the image analysis module 243, the artificial intelligence model driving module 245, and/or the image merging module 247.

In an embodiment, the upscale module 241 may upscale a first image 405. For example, the upscale module 241 may upscale the first image 405 with a first resolution to have a second resolution higher than the first resolution.

In an embodiment, the image analysis module 243 may analyze the upscaled first image 410 to identify a similarity between a plurality of pixels included in the first image. For example, the operation of identifying the similarity between the plurality of pixels included in the first image may be an operation of detecting (or analyzing) an edge region in the first image. For example, the image analysis module 243 may generate a second image 415 by analyzing an edge region in the upscaled first image 410. For example, the edge region in the second image 415 may be represented in white, and a region that is not the edge region may be represented in black. The artificial intelligence model driving module 245 may perform image processing on pixels 420 corresponding to the edge region among the plurality of pixels, and may not perform (e.g., bypass) image processing on pixels 425 not corresponding to the edge region. For example, the artificial intelligence model driving module 245 may include a plurality of filters (e.g., a plurality of convolution layers). Performing image processing on the pixels 420 corresponding to the above-described edge region may include applying a plurality of filters to the pixels 420 corresponding to the edge region among the plurality of pixels. Not performing image processing on the pixels 425 that do not correspond to the above-described edge region may include not applying a plurality of filters to the pixels 425 that do not correspond to the edge region.

In an embodiment, the image merging module 247 may generate a third image 430 by merging the upscaled first image and a feature map based on at least some pixels to which a plurality of filters is applied by the artificial intelligence model driving module 245 among the plurality of pixels and at least some other pixels to which the plurality of filters is not applied. The processor 240 may display the generated third image 430 on the display (e.g., the display 230 in FIG. 2).

In FIG. 4 according to various embodiments, the upscale module 241 is disposed before the image analysis module 243 and it is described that the first image 405 is upscaled and then the upscaled first image 410 is analyzed, but this is not limited thereto. For example, the upscale module 241 may be disposed after the image merging module 247. In this case, the upscale module 241 may upscale the third image 430 generated by the image merging module 247. As another example, the electronic device 101 may further include a second upscale module (not illustrated) disposed after the image merging module 247, in addition to the upscale module 241. In this case, the second upscale module (not illustrated) may upscale the third image 430 generated by the image merging module 247 once again.

FIG. 5 is a diagram illustrating a method of identifying a similarity between a plurality of pixels included in an image according to an embodiment of the disclosure.

Referring to FIG. 5, a processor (e.g., the processor 240 in FIG. 2) of an electronic device (e.g., the electronic device 101 in FIG. 1) may include an image analysis module (e.g., the image analysis module 243 in FIG. 2). The image analysis module 243 may analyze an image and identify a similarity a plurality of pixels. An operation of identifying the similarity between the plurality of pixels included in the image according to an embodiment may be an operation of detecting (or analyzing) an edge region in the image. For example, the image analysis module 243 may detect (or analyze) the edge region in the image by using a specified filter. In an embodiment, the designated filter may include a 7×7 edge detect filter 510. However, this is not limited thereto.

In an embodiment, the image analysis module 243 may configure one of the plurality of pixels included in the image as a first reference pixel 515 ($Pixel_{x,y}$) (x and y indicate a position of the pixel in the image) by using a 7x7 edge detect filter 510. The image analysis module 243 may apply the 7x7 edge detect filter 510 with respect to the first reference pixel ($Pixel_{x,y}$) 515 as a center. For example, the image analysis module 243 may configure an $n^{th}$ pixel among a total of 49 pixels based on the first reference pixel 515 ($Pixel_{x,y}$), as a second reference pixel 520 ($Pixel_{x+i,y+j}$). The image analysis module 243 may determine a plurality of first pixels 525 adjacent to the second reference pixel 520 for detecting a similarity to the second reference pixel 520. For example, the image analysis module 243 may determine pixels which are located after the

second reference pixel 520 and for which image analysis is not performed among 3x3 pixels with respect to the second reference pixel 520, excluding pixels located before the second reference pixel 520, as the plurality of first pixels 525 adjacent to the second reference pixel 520. The image analysis module 243 may perform an operation of analyzing the image from the uppermost left pixel to the right in sequence with respect to the plurality of first pixels 525 adjacent to the second reference pixel 520.

The operation of analyzing the image according to an embodiment may be performed on the plurality of pixels included in the image. For example, the image analysis module 243 may calculate a boundary value (e.g., detect count) for identifying whether the plurality of pixels included in the image satisfy a specified similarity condition, based on the following Equation 1. The boundary value may refer to a value for determining pixels corresponding to an edge region among the plurality of pixels included in the image.

[Equation 1]

$$\sum_{j=-3}^{3}\sum_{i=-3}^{3}\left\{\begin{array}{c}\left(\left|Pixel_{x+i,y+j}-Pixel_{x+(i+1),y+j}\right|<Threshold\ ?\ 1:0\right)+\\\left(\left|Pixel_{x+i,y+j}-Pixel_{x+(i-1),y+(j+1)}\right|<Threshold\ ?\ 1:0\right)+\\\left(\left|Pixel_{x+i,y+j}-Pixel_{x+i,y+(j+1)}\right|<Threshold\ ?\ 1:0\right)+\\\left(\left|Pixel_{x+i,y+j}-Pixel_{x+(i+1),y+(j+1)}\right|<Threshold\ ?\ 1:0\right)\end{array}\right\}=Detect\ Count$$

In an embodiment, the image analysis module 243 may sequentially compare the second reference pixel 520 ($Pixel_{x+i,y+j}$) with four neighboring pixels (530). When a difference between the second reference pixel 520 and one of the four neighboring pixels is less than or equal to a predetermined threshold value, the image analysis module 243 may determine that the second reference pixel 520 and the one pixel are similar (or identical) pixels and may increase a boundary value (e.g., detect count) by "1." In an embodiment, when the second reference pixel 520 and all of the four neighboring pixels have a difference less than or equal to the predetermined threshold, the image analysis module 243 may determine that the second reference pixel 520 and all of the four neighboring pixels are similar (or identical) pixels, and may increase the boundary value (e.g., detect count) by "4."

In an embodiment, it has been described that the image analysis module 243 sequentially compares the second reference pixel 520 and the four neighboring pixels 530, but the disclosure is not limited thereto. For example, there may be no adjacent pixel (e.g., neighboring pixel) depending on a location of a reference pixel among the plurality of pixels included in the image. For example, when the second reference pixel 520 corresponds to the $49^{th}$ (e.g., the pixel at the bottom right in the 7x7 edge detect filter 510) in the 7x7 edge detect filter 510, there may be no comparison target pixel in the 7x7 edge detect filter 510. For example, the number of adjacent pixels may be less than 4 depending on the location of the reference pixel among the plurality of pixels included in the image. For example, when the second reference pixel 520 is a first pixel in the 7x7 edge detect filter 510 (e.g., the uppermost left pixel in the 7x7 edge detect filter 510), there may be three pixels (e.g., a pixel existing to the right of the second reference pixel, a pixel existing to the lower right of the second reference pixel, and a pixel existing to the lower side of the second reference pixel) as comparison target pixels in the 7x7 edge detect filter 510.

In an embodiment, the image analysis module 243 may apply the 7×7 edge detect filter 510 to the plurality of pixels included in the image and repeatedly perform the operation with respect to the plurality of pixels. Therefore, the image analysis module 243 may perform an operation of comparing some pixels to which the 7x7 edge detect filter 510 is applied among the plurality of pixels included in the image with the predetermined threshold 196 times (e.g., 4 (e.g., number of neighboring pixels)*7*7). Based on this, in the case where the boundary value (e.g., detect count) is "196," the image analysis module 243 may determine that some pixels (e.g., pixels in the 7x7 edge detect filter 510 including the first reference pixel ($Pixel_{x,y}$) 515) to which the 7x7 edge detect filter 510 is applied are similar (or identical) pixels. In other words, the image analysis module 243 may determine that some pixels (e.g., pixels in the 7×7 edge detect filter 510 including the first reference pixel 515 ($Pixel_{x,y}$)) to which the 7×7 edge detect filter 510 is applied do not satisfy a specified similarity condition, and may not perform image processing (e.g., operation 315 in FIG. 3). When the boundary value (e.g., detect count) is less than "196," the image analysis module 243 may determine that a dot or edge region exists around some pixels (e.g., the first reference pixel ($Pixel_{x,y}$) 515) to which the 7x7 edge detect filter 510 is applied. In other words, the image analysis module 243 may determine that some pixels (e.g., pixels in the 7×7 edge detect filter 510 including the first reference pixel ($Pixel_{x,y}$) 515) to which the 7×7 edge detect filter 510 is applied satisfy the specified similarity condition, and perform image processing (e.g., operation 310 in FIG. 3 described above) so as to clearly output a corresponding pattern (e.g., a dot or edge region).

In various embodiments, although it has been described that the image analysis module 243 performs an

operation of comparing some pixels to which the 7x7 edge detect filter 510 is applied among the plurality of pixels included in the image with the predetermined threshold value 196 times (e.g., 4 (e.g., the number of neighboring pixels)*7*7), but this is not limited thereto. For example, as described above, there may be no adjacent pixel (e.g., neighboring pixel) depending on a location of a reference pixel among the plurality of pixels included in the image. In this case, the operation of comparing some pixels to which the 7×7 edge detect filter 510 is applied among the plurality of pixels included in the image with the predetermined threshold may be performed 156 times.

In FIG. 5 according to various embodiments, the boundary value (e.g., detect count) used as a criterion for determining whether the edge region exists has been described as "196," but this is not limited thereto. For example, the boundary value may be adjusted according to a user configuration, an internal configuration of the electronic device 101, or other environments. As another example, the boundary value may be automatically changed according to an algorithm in the electronic device 101, and sensitivity for detecting an edge region may be modified.

In an embodiment, when the edge region is determined after the image analysis operation is completed by the image analysis module 243, the processor 240 may generate an edge map, and an artificial intelligence model driving module (e.g., the artificial intelligence model driving module 245 in FIG. 2) may perform image processing sequentially, based on the edge map. In an embodiment, the edge map may be a map in which pixels included in the image are represented in gray levels, for example, values in the range of 0 to 255. For example, the artificial intelligence model driving module 245 may not perform image processing (e.g., restrict applying a plurality of filters related to image quality included in the artificial intelligence model driving module 245) on pixels represented as 0 (e.g., black), and may perform image processing (e.g., apply the plurality of filters related to image quality included in the artificial intelligence model driving module 245) on the pixels represented as 255 (e.g., white).

In an embodiment, the image analysis module 243 may adjust the predetermined threshold to adjust sensitivity for detecting an edge region.

This is not limited thereto, and the image analysis module 243 may enable the artificial intelligence model driving module 245 to partially activate the plurality of filters related to image quality improvement, based on the boundary value (e.g., detect count), so as to gradually perform image processing. For example, when a boundary value (e.g., detect count) of predetermined pixels is a value in a first range (e.g., a value in the range of 0 to 49), the image analysis module 243 may determine the pixels as pixels corresponding to a dot or edge region, and may map a first value (e.g., 225) to the pixels corresponding to the dot or edge region. The artificial intelligence model driving module 245 may perform image processing on the pixels having the first value (e.g., 255). When a boundary value (e.g., detect count) of predetermined pixels is a value in a second range (e.g., a value in the range of 50 to 98), the image analysis module 243 may map a second value (e.g., 239) to the predetermined pixels. The artificial intelligence model driving module 245 may perform image processing on the predetermined pixels having the second value (e.g., 239) by using activated filters among the plurality of filters.

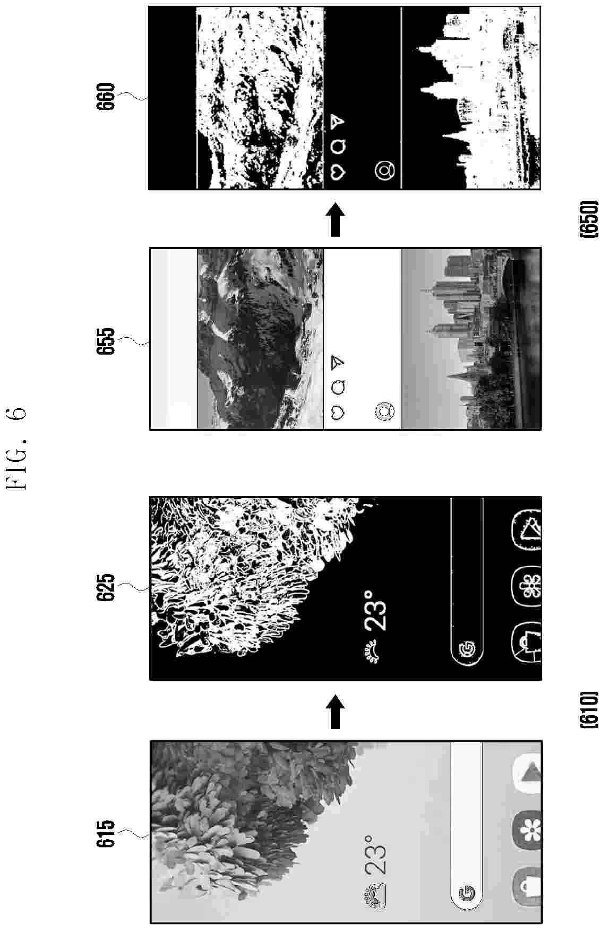

FIG. 6 is a diagram illustrating a method of performing image processing according to an embodiment of the disclosure.

Referring to diagram 610 in FIG. 6, an image analysis module (e.g., the image analysis module 243 in FIG. 2) of a processor (e.g., the processor 240 in FIG. 2) may generate a second image 625 that is an image in which an edge region is detected based on a similarity between a plurality of pixels included in a first image 615. Referring to diagram 650 of FIG. 6, the image analysis module 243 may generate a fourth image 660 that is an image in which an edge region is detected based on a similarity between a plurality of pixels included in a third image 655.

In an embodiment, the second image 625 and the fourth image 660, which are images in which the edge regions are detected, may be images representing pixels on which image processing is to be performed and pixels on which image processing is not to be performed. For example, a white region may correspond to pixels corresponding to a dot or edge region since a boundary value (e.g., the boundary value (e.g., detect count) in FIG. 5) is less than "196," and may be a region representing pixels on which image processing is to be performed. A black region may correspond to pixels having similar (or identical) pixel values since a boundary value (e.g., the boundary value (e.g., detect count) in FIG. 5) is equal to "196,"and may be a region representing pixels on which image processing is not to be performed. In an embodiment, the artificial intelligence model driving module (e.g., the artificial intelligence model driving module 245 in FIG. 2) of the processor 240 may perform image processing (e.g., applying a plurality of filters related to image quality and included in the artificial intelligence model driving module 245) on the pixels having a boundary value less than "196" (e.g., pixels corresponding to a dot or edge region), and may not perform image processing (e.g., restricting applying the plurality of filters related to the image quality and included in the artificial intelligence model driving module 245) on pixels having a boundary value of 196 (e.g., pixels having similar or identical pixel values), based on the second image 625 or fourth image 660 generated by the image analysis module 243.

In FIGS. 3 to 6 according to various embodiments, the electronic device 101 may not only output a clear image on a large display, but also reduce current consumption by performing image processing only on at least some pixels (e.g., pixels corresponding to a dot or edge region) that need image processing among the plurality of pixels included in the image.

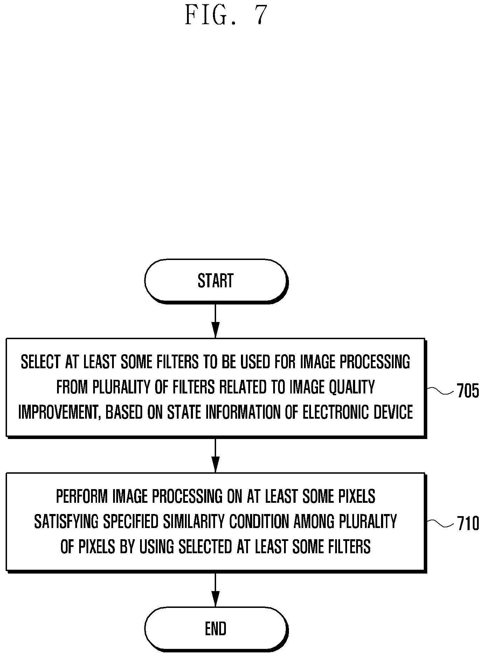

FIG. 7 is a flowchart illustrating a method of selecting at least some filters to be used for image processing, based on state information of the electronic device 101, according to an embodiment of the disclosure.

In the following embodiments, the operations in FIG. 7 may be performed in sequence, but are not necessarily performed in sequence. For example, the order of the operations in FIG. 7 may be changed, and at least two operations may be performed in parallel.

According to an embodiment, operations 705 and 710 of FIG. 7 may be understood as being performed by a processor (e.g., the processor 240 in FIG. 2) of an electronic device (e.g., the electronic device 101 in FIG. 1).

Referring to FIG. 7, in operation 705, the processor 240 may select, based on state information of the electronic device 101, at least some filters to be used for image processing from among a plurality of filters related to image quality improvement.

In an embodiment, the state information of the electronic device 101 may include information related to a remaining capacity of a battery (e.g., the battery 189 in FIG. 1) of the electronic device 101, information related to a characteristic (e.g., display characteristic (e.g., resolution)) of an application displayed (or requested to be displayed) on a display (e.g., the display 230 in FIG. 2) of the electronic device 101, information related to an operating state (e.g., a power saving state (or low power state)) of the electronic device 101, information related to detection of a gaze of a user of the electronic device 101, and/or information related to detection of a user input.

In an embodiment, the processor 240 may select a first number of filters among a plurality of filters related to image quality improvement, when the remaining capacity of the battery 189 of the electronic device 101 is identified as being less than or equal to a specified capacity, based on the information related to the remaining capacity of the battery 189. However, this is not limited thereto. For example, the processor 240 may select the first number of filters from among the plurality of filters related to image quality improvement when an application is identified as an application not requiring high image quality, based on the information related to the characteristic of the application. As another example, when the processor 240 identifies that the electronic device 101 operates in a power saving state (or low power state) based on the information related to the operating state of the electronic device 101, the processor 240 may select the first number of filters from among the plurality of filters related to image quality improvement. As another example, the processor 240 may select the first number of filters among the plurality of filters related to image quality improvement when it is identified that a state in which the user's gaze is detected is shorter than or equal to a specified time, based on the information related to detection of the gaze of the user of the electronic device 101. As another example, when a first user input exceeding a specified speed is detected based on the information related to detection of the user input, the processor 240 may select the first number of filters among the plurality of filters related to image quality improvement.

In an embodiment, the processor 240 may select a second number of filters among the plurality of filters related to image quality improvement, when the remaining capacity of the battery 189 is identified as exceeding the specified capacity, based on the information related to the remaining capacity of the battery 189 of the electronic device 101. However, this is not limited thereto. For example, the processor 240 may select the second number of filters among the plurality of filters related to image quality improvement when the application is identified as an application requiring high image quality, based on the information related to the characteristic of the application. As another example, the processor 240 may select the second number of filters among the plurality of filters related to image quality improvement, when it is identified that the electronic device 101 does not operate in a power-saving state (or low-power state) based on the information related to the operating state of the electronic device 101. As another example, the processor 240 may select the second number of filters among the plurality of filters related to image quality improvement, when it is identified that a state in which the user's gaze is detected exceeds the designated time, based on the information related to detection of the gaze of the electronic device 101. As another example, the processor 240 may select the second number of filters from among the plurality of filters related to image quality improvement when the first user input exceeding the specified speed is not detected, based on the information related to detection of the user input.

In an embodiment, the second number may be greater than the first number, or equal to the number of the plurality of filters.

In an embodiment, the processor 240 may perform image processing on at least some pixels satisfying a specified similarity condition among a plurality of pixels, by using the selected at least some filters in operation 710. Performing image processing on the at least some pixels satisfying the specified similarity condition among the plurality of pixels by using the selected at least some filters may be applying the selected at least some filters to the at least some pixels satisfying the specified similarity condition among the plurality of pixels. For example, when the first number of filters are selected, the processor 240 may perform image processing on the at least some pixels satisfying the specified similarity condition among the plurality of pixels by using the selected first number of filters. As another example, when the second number of filters are selected, the processor 240 may perform image processing on the at least some pixels satisfying the specified similarity condition among the plurality of pixels, by using the selected second number of filters.

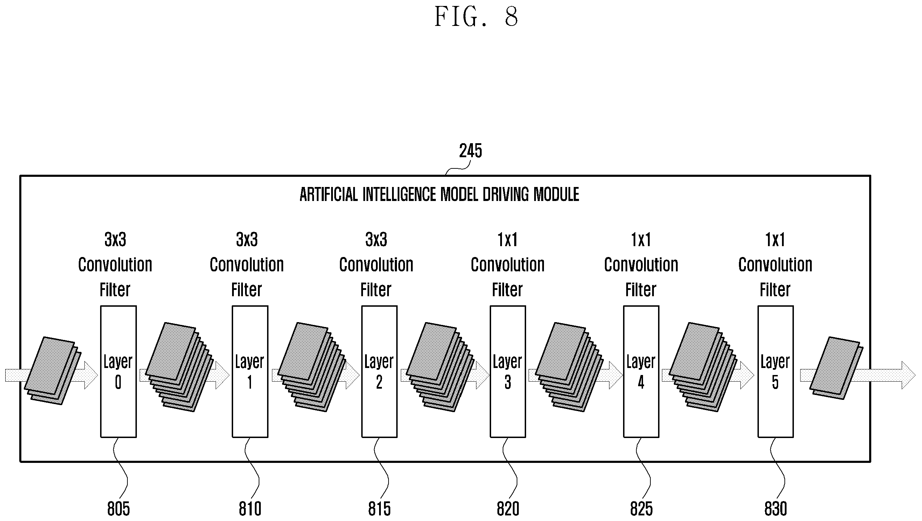

In relation to the operations in FIG. 7 above, various embodiments will be described in FIGS. 8 to 12 below.

FIG. 8 is a diagram illustrating a method of selecting at least some filters to be used for image processing, based on state information of the electronic device 101 according to an embodiment of the disclosure.

Referring to FIG. 8, a processor (e.g., the processor 240 in FIG. 2) of an electronic device (e.g., the electronic device 101 in FIG. 1) may include an artificial intelligence model driving module (e.g., the artificial intelligence model driving module 245 in FIG. 2).

In an embodiment, the artificial intelligence model driving module 245 may include a plurality of filters (e.g., a plurality of convolutional filters (or layers)). For example, the plurality of filters may include three 3×3 filters 805, 810, and 815 and three 1×1 filters 820, 825, and 830. However, this is not limited thereto.

In an embodiment, the artificial intelligence model driving module 245 may activate or deactivate a plurality of filters. For example, the artificial intelligence model driving module 245 may partially activate at least some filters to be used for image processing among the plurality of filters related to image quality improvement, based on the state information of the electronic device 101. For example, the state information of the electronic device 101 may include information related to a remaining capacity of a battery (e.g., the battery 189 in FIG. 1) of the electronic device 101, information related to a characteristic of an application displayed (or requested to be display (or output)) on a display (e.g., the display 230 in FIG. 2) of the electronic device 101, information related to an operating state (e.g., power saving state (or low power state)) of the electronic device 101, information related to detection of a gaze of a user of the electronic device 101, and/or information related to detection of a user input.

In an embodiment, as described above, the artificial intelligence model driving module 245 may include six filters, for example, three 3x3 filters 805, 810, and 815 and three 1x1 filters 820, 825, and 830. In an embodiment, the three 3x3 filters 805, 810, and 815 may be filters related to image operation. The three 1x1 filters 820, 825, and 830 may be filters related to image quality.

In an embodiment, the artificial intelligence model driving module 245 may maintain one 3x3 filter 805, 810, or 815 and one 1x1 filter 820, 825, or 830 among six filters in an active state, and partially activate the other two 3x3 filters and the other two 1x1 filters, respectively, based on the state information of the electronic device 101. Accordingly, the artificial intelligence model driving module 245 may partially activate the plurality of filters in a total of 16 steps. However, this is not limited thereto.

In an embodiment, when the state information of the electronic device 101 is information related to power of the electronic device 101, the artificial intelligence model driving module 245 may partially activate or deactivate the three 3×3 filters 805, 810, and 815 related to image operation (e.g., control each of the 3×3 filters 805, 810, and 815 to be in on state/off state). When the state information of the electronic device 101 is information related to image quality, the artificial intelligence model driving module 245 may partially activate or deactivate the three 1x1 filters 820, 825, and 830 related to image quality (e.g., control the 1x1 filters 820, 825, and 830 one by one to be in on state/off state).

In an embodiment, although it has been described that the plurality of filters is partially activated or deactivated based on whether the state information of the electronic device 101 is the information related to the power of the electronic device 101 or the information related to image quality, but the disclosure is not limited thereto. For example, the processor 240 may partially activate or deactivate the plurality of filters, based on a user selection. For example, the processor 240 may display a menu related to a low-power mode and a menu related to a high image quality mode on the display (e.g., the display 230 in FIG. 2). When one of the menu related to the low power mode and the menu related to the high image quality mode is selected, the processor 240 may perform image processing by partially activating or deactivating the plurality of filters in accordance with the selected menu.

The three 3x3 filters 805, 810, and 815 and the three 1x1 filters 820, 825, and 830 illustrated in FIG. 8 according to various embodiments are merely an embodiment for ease description of the disclosure, and the disclosure is not limited to the number and kinds (or types) of filters (e.g., three 3x3 filters 805, 810, and 815 and three 1x1 filters 820, 825, and 830) described above.

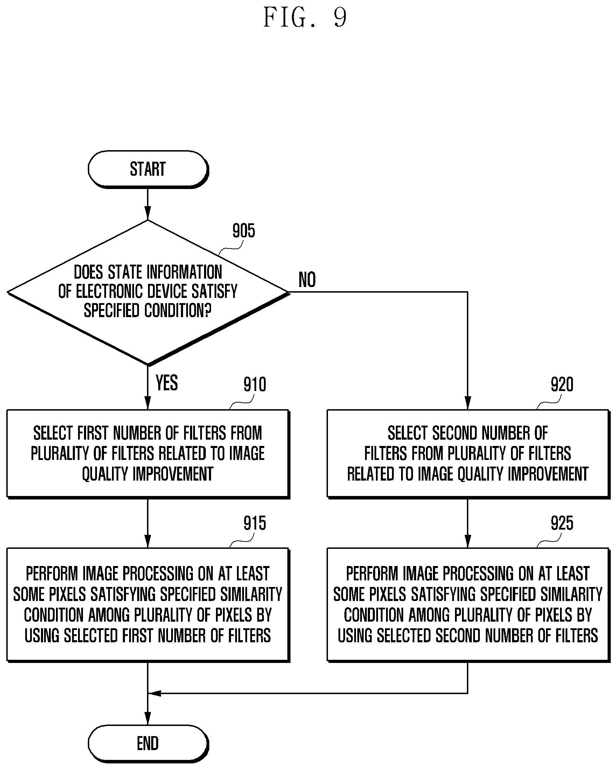

FIG. 9 is a flowchart illustrating a method of selecting at least some filters to be used for image processing, based on state information of the electronic device 101, according to an embodiment of the disclosure.

In the following embodiments, the operations in FIG. 9 may be performed in sequence, but are not necessarily performed in sequence. For example, the order of the operations in FIG. 9 may be changed, and at least two operations may be performed in parallel.

According to an embodiment, operations 905 to 925 in FIG. 9 may be understood as being performed by a processor (e.g., the processor 240 in FIG. 2) of an electronic device (e.g., the electronic device 101 in FIG. 1).

FIG. 9 according to various embodiments may further specify an additional operation of operation 305 or operation 310 of FIG. 3 described above. This is not limited thereto, and the operations in FIG. 9 may be performed as operations separate from the operations of FIG. 3.

Referring to FIG. 9, the processor 240 may identify whether state information of the electronic device 101 satisfies a specified condition in operation 905.

The state information of the electronic device 101 according to an embodiment may include information related to a remaining capacity of a battery (e.g., the battery 189 in FIG. 1) of the electronic device 101, information related to a characteristic (e.g., display characteristic (e.g., resolution)) of an application displayed (or requested to be displayed (or output)) on the display 230 of the electronic device 101, and/or information related to an operating state (e.g., power-saving

state (or low-power state)) of the electronic device 101.

For example, the processor 240 may identify whether the remaining capacity of the battery 189 is less than or equal to a specified capacity. For example, the processor 240 may acquire the information related to the remaining capacity of the battery 189 from a power management module (e.g., the power management module 188 in FIG. 1). The processor 240 may identify the information related to the remaining capacity of the battery 189 acquired from the power management module 188, and identify whether the remaining capacity of the battery 189 satisfies the specified condition, based on whether the remaining capacity is less than or equal to the specified capacity.

As another example, the processor 240 may identify information related to the characteristic (e.g., display characteristics (e.g., resolution)) of the application currently displayed (or requested to be displayed) on the display 230 of the electronic device 101. The processor 240 may identify whether the characteristic of the application satisfies a specified condition, based on whether the characteristic of the application is an application requiring high image quality. For example, the application requiring high image quality may include an application related to visibility or image quality, such as a photo application or a social network service (SNS) application, and/or an application configured by the user to be displayed in high image quality (e.g., an application related to video reproduction). However, this is not limited thereto. As another example, the processor 240 may identify the information related to the operating state (e.g., a power saving state (or low power state)) of the electronic device 101. For example, the power saving state (or low power state) may refer to a state of restricting at least some of the functions that the electronic device 101 may perform, so as to reduce the power consumption of the battery 189, compared to a general state. The processor 240 may identify whether the operating state of the electronic device 101 satisfies a designated condition, based on whether the operating state of the electronic device 101 is a power saving state (or low power state) or not.

In an embodiment, when the state information of the electronic device 101 is identified as satisfying the specified condition (e.g., YES in operation 905), the processor 240 may select a first number of filters among the plurality of filters related to image quality improvement (e.g., the plurality of filters 805, 810, 815, 820, 825, and 830 in FIG. 8) in operation 910. For example, as described in FIG. 8, among the plurality of filters (e.g., the plurality of filters 805, 810, 815, 820, 825, and 830 in FIG. 8), the three 3x3 filters 805, 810, and 815 may be filters related to image operation. In addition, the three 1×1 filters 820, 825, and 830 among the plurality of filters (e.g., the plurality of filters 805, 810, 815, 820, 825, and 830 in FIG. 8) may be filters related to image quality. The processor 240 may, when the state information of the electronic device 101 is identified as satisfying the specified condition, deactivate at least two of the three 3×3 filters 805, 810, and 815 related to the image computation (e.g., control at least two 3x3 filters to be in the off state), and/or deactivate at least two of the three 1×1 filters 820, 825, and 830 related to image quality (e.g., control at least two 1x1 filters to be in the off state). By deactivating the at least two 3x3 filters (e.g., controlling the at least two 3x3 filters to be in the off state) and/or deactivating the at least two 1x1 filters (e.g., controlling the at least two 1x1 filters to be in the off state), the processor 240 may perform the image operation fewer times and operate at a low power, thereby reducing consumption of the battery 189. However, this is not limited thereto.

In an embodiment, in operation 915, the processor 240 may perform image processing on at least some pixels satisfying a specified similarity condition among a plurality of pixels by using the selected first number of filters. For example, the processor 240 may apply the selected first number of filters to the at least some pixels satisfying the specified similarity condition among the plurality of pixels.

In an embodiment, when the state information of the electronic device 101 is the information related to the remaining capacity of the battery 189 of the electronic device 101, a state that satisfies the specified condition may include a state in which the remaining capacity of the battery 189 is less than or equal to the specified capacity. In an embodiment, when the state information of the electronic device 101 is the information related to the characteristic (e.g., display characteristic (e.g., resolution)) of the application displayed (or requested to be displayed (or output)) on the display 230 of the electronic device 101, the state that satisfies the specified condition may include a state in which the application is an application that does not require high image quality (e.g., an application for which image quality is not important). In an embodiment, when the state information of the electronic device 101 is the information related to the operating state (e.g., power saving state (or low power state)) of the electronic device 101, the state that satisfies the specified condition may include a state in which the operating state of the electronic device 101 is the power saving state (or low power state).

In an embodiment, the at least some pixels satisfying the specified similarity condition among the plurality of pixels may be pixels corresponding to the edge region that has been described in operation 310 in FIG. 3.

In an embodiment, when the state information of the electronic device 101 is identified as not satisfying the specified condition (e.g., NO in operation 905), the processor 240 may select a second number of filters among the plurality of filters related to image quality improvement (e.g., the plurality of filters 805, 810, 815, 820, 825, and 830 in FIG. 8) in operation 920.

In an embodiment, when the state information of the electronic device 101 is the information related to the remaining capacity of the battery 189 of the electronic device 101, a state that does not satisfy the specified condition may include a state in which the remaining capacity of the battery 189 exceeds the specified capacity. In an embodiment, when the state information of the electronic device 101 is the information related to the characteristic (e.g., display characteristic

(e.g., resolution)) of the application displayed (or requested to be display (or output)) on the display 230 of the electronic device 101, the state that does not satisfy the specified condition may include a state in which the characteristic of the application is an application requiring high image quality. In an embodiment, when the state information of the electronic device 101 is the information related to the operating state (e.g., power saving state (or low power state)) of the electronic device 101, the state that does not satisfy the specified condition may include a state in which the operating state of the electronic device 101 is not the power saving state (or low power state).

In an embodiment, in operation 925, the processor 240 may perform image processing on the at least some pixels satisfying the specified similarity condition among the plurality of pixels by using the selected second number of filters. For example, the processor 240 may apply the selected second number of filters to the at least some pixels satisfying the specified similarity condition among the plurality of pixels.

In an embodiment, the second number may be greater than the first number, or equal to the number (e.g., 6) of the plurality of filters. For example, when it is identified that the state information of the electronic device 101 does not satisfy the specified condition, the processor 240 may perform image processing on the at least some pixels satisfying the specified similarity condition among the plurality of pixels by using the second number of filters, which is more than the first number or equal to the number of the plurality of filters, to sharpen an edge region in the image and output a high-quality image.

In FIG. 9 according to various embodiments, it has been described that, based on whether the remaining capacity of the battery 189 is less than or equal to the specified capacity, whether the characteristic of the application is an application requiring high image quality, or whether the operating state of the electronic device 101 is the power saving state (or low power state), the plurality of filters (e.g., the plurality of filters 805, 810, 815, 820, 825, and 830 in FIG. 8) related to image quality improvement may be partially controlled (e.g., activated or inactivated). However, the disclosure is not limited thereto.

For example, the processor 240 may partially control (e.g., activate or deactivate) the plurality of filters (e.g., plurality of filters 805, 810, 815, 820, 825, and 830 in FIG. 8) related to image quality improvement, based on whether brightness of the display 230 is decreased as a time for turning off the display 230 arrives after activation of the display 230. For example, when a state in which the brightness of the display 230 is decreased is detected as the time for turning off the display 230 arrives after the activation of the display 230, the processor 240 may perform operations 910 and 915. When, after the activation of the display 230, the state in which the brightness of the display 230 is decreased is not detected since the time for turning off the display 230 does not arrive, the processor 240 may perform operations 920 and 925.

As another example, the processor 240 may identify whether the user is in a driving state, a walking state, or an exercising state, based on sensor information related to a movement of the electronic device 101 and/or a state in which the electronic device 101 is connected to an external electronic device through a communication circuit (e.g., the communication module 190 in FIG. 1). The processor 240 may partially control (e.g., activate or deactivate) the plurality of filters (e.g., the plurality of filters 805, 810, 815, 820, 825, and 830 in FIG. 8) related to image quality improvement, based on the identified state indicating whether the user is in a driving state, a walking state, or an exercising state. For example, when the user is in the driving state, walking state, or exercising state, the processor 240 may recognize the same as a situation in which visibility is less important than in a static state, and perform operations 910 and 915. When the user is not in the driving state, walking state, or exercising state, the processor 240 may recognize the same as a situation in which importance of visibility is high, and perform operations 920 and 925.

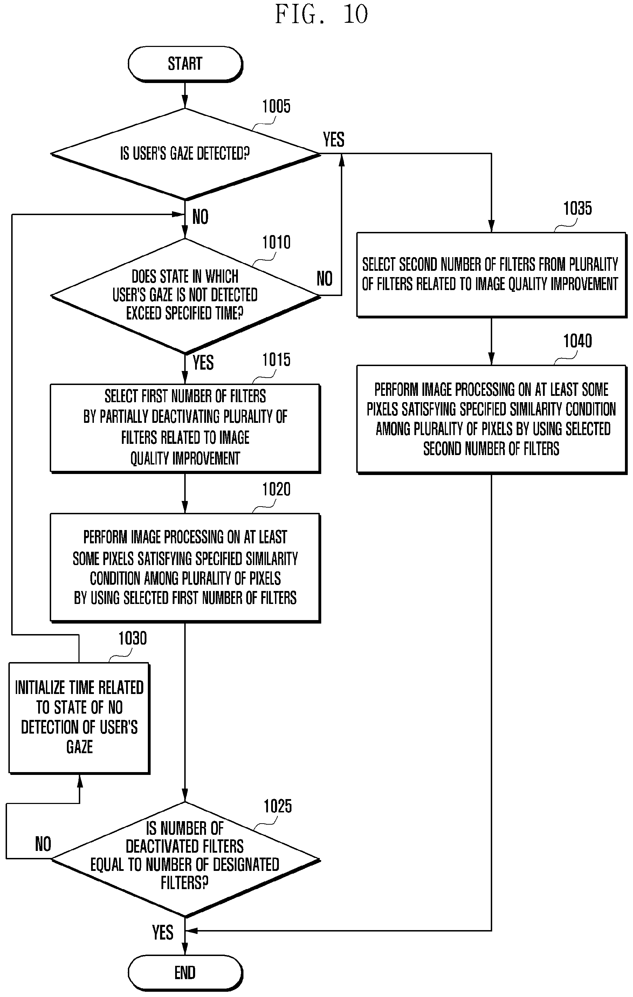

In FIG. 9 according to various embodiments, the operation of performing image processing when the state information of the electronic device 101 is the information related to the remaining capacity of the battery 189 of the electronic device 101, the information related to the characteristic (e.g., display characteristic (e.g., resolution)) of the application displayed (or requested to be displayed (or output)) on the display 230 of the electronic device 101, or the information related to the operating state (e.g., power saving state (or low-power state)) of the electronic device 101 has been described, but the disclosure is not limited thereto. For example, the state information of the electronic device 101 may further include information related to detection of a gaze of a user of the electronic device 101 and/or information related to detection of a user input. In this regard, various embodiments will be described with reference to FIG. 10 to FIG. 12 below.

FIG. 10 is a flowchart illustrating a method of selecting at least some filters to be used for image processing, based on state information of the electronic device 101, according to an embodiment of the disclosure.

In the following embodiments, the operations in FIG. 10 may be performed in sequence, but they are not necessarily performed in sequence. For example, the order of the operations in FIG. 10 may be changed, and at least two operations may be performed in parallel.

According to an embodiment, operations 1005 to 1040 in FIG. 10 may be understood as being performed by a processor (e.g., the processor 240 in FIG. 2) of an electronic device (e.g., the electronic device 101 in FIG. 1).

FIG. 10 according to various embodiments may further specify an additional operation of operation 305 or operation 310 of FIG. 3 described above. This is not limited thereto, and the operations in FIG. 10 may be performed as operations separate from the operations in FIG. 3.

In an embodiment, in FIG. 10, the state information of the electronic device 101 may include information related to detection of a gaze of a user of the electronic device 101.

Referring to FIG. 10, in operation 1005, the processor 240 may identify whether the user's gaze is detected. For example, the processor 240 may acquire an image of the user's face through a camera (e.g., the camera module 180 in FIG. 1). The processor 240 may detect a direction of the user's gaze from the acquired user's facial image. For example, the processor 240 may identify whether the user is looking at a display (e.g., the display 230 in FIG. 2), based on the direction of the user's gaze.

In an embodiment, when the user's gaze is not detected (e.g., NO in operation 1005), the processor 240 may determine whether a state in which the user's gaze is not detected exceeds a specified time in operation 1010. For example, when it is not identified that the user is in a state of looking at the display 230 (e.g., a state in which the user's gaze is detected), the processor may identify whether the state in which the user is not looking at the display 230 (e.g., the state in which the user's gaze is not detected) exceeds the specified time.

In an embodiment, when it is identified that the state in which the user's gaze is not detected exceeds the specified time (e.g., YES in operation 1010), the processor 240 may partially deactivate a plurality of filters (e.g., the plurality of filters 805, 810, 815, 820, 825, and 830 in FIG. 8) related to image quality improvement and select a first number of filters in operation 1015. For example, as illustrated in FIG. 8, among the plurality of filters (e.g., the plurality of filters 805, 810, 815, 820, 825, and 830 in FIG. 8), three $3\times3$ filters 805, 810, and 815 may be filters related to image operation, and three $1\times1$ filters 820, 825, and 830 may be filters related to image quality. When it is identified that the state in which the user's gaze is not detected exceeds the specified time, the processor 240 may recognize the same as a situation in which importance of visibility is low or a situation in which the user is not using the electronic device 101, and deactivate at least two 1x1 filters among the three 1x1 filters 820, 825, and 830 related to image quality (e.g., control at least two 1x1 filters to be in the off state). This is not limited thereto, and when it is identified that the state in which the user's gaze is not detected exceeds the specified time, the processor 240 may deactivate at least two 3x3 filters among the three 3x3 filters 805, 810, and 815 related to image operation (e.g., control the at least two 3x3 filters to be in the off state).

In an embodiment, the processor 240 may perform image processing on at least some pixels satisfying a specified similarity condition among the plurality of pixels, by using the selected first number of filters in operation 1020. For example, the processor 240 may apply the selected second number of filters to the at least some pixels satisfying the specified similarity condition among the plurality of pixels.

In an embodiment, the at least some pixels satisfying the specified similarity condition among the plurality of pixels may be pixels corresponding to the edge region described in operation 310 in FIG. 3 above.

In an embodiment, the processor 240 may identify whether the number of deactivated filters is the same as the number of designated filters in operation 1025. For example, the number of designated filters may include the number of filters configured by default. For example, one of the three 3x3 filters 805, 810, and 815 and one of the three 1x1 filters 820, 825, and 830 may be in an active state by default. In other words, by deactivating at least two 3x3 filters among the three 3x3 filters 805, 810, and 815 (e.g., controlling at least two 3x3 filters to be in the off state) and deactivating at least two 1x1 filters among the three 1x1 filters 820, 825, and 830 (e.g., controlling at least two 1x1 filters to be in the off state), the maximum number of deactivated filters may be 4. For another example, the three $3\times3$ filters 805, 810, and 815 and three $1\times1$ filters 820, 825, and 830 may be controlled to be in the off state, and in this case, the number of designated filters may be the number (e.g., 6) of the plurality of filters.

In an embodiment, when it is identified that the number of deactivated filters is equal to the number of designated filters (e.g., YES in operation 1025), the processor 240 may terminate the operation of selecting (or controlling) at least some filters to be used for image processing. When it is identified that the number of deactivated filters is different from the number of designated filters (e.g., NO in operation 1025), the processor 240 may initialize the time related to the state in which the user's gaze is not detected in operation 1030, and then identify whether the state in which the user's gaze is not detected exceeds the specified time in operation 1010. This is not limited thereto, and when it is identified that the number of deactivated filters is different from the number of designated filters (e.g., NO in operation 1025), the processor 240 may initialize the time related to the state in which the user's gaze is not detected in operation 1030, and then identify whether the user's gaze is detected in operation 1005.

In an embodiment, the first number of filters may correspond to a smaller number (e.g., one of 1 to 5) of filters than the number of the plurality of filters.

In an embodiment, the processor 240 may repeatedly perform operation 1010, operation 1015, operation 1020, and operation 1030 until it is identified that the number of the deactivated filters is equal to the number of the plurality of filters. The operation (e.g., operation 1015) of partially deactivating the plurality of filters and selecting the first number of filters, as operations 1010, 1015, 1020, and 1030 may be repeated, may be controlling the 3x3 filters 805, 810, and 815 and/or 1x1 filters 820, 825, and 830 to be in the off state one by one. For example, every time that the state of no detection of the user's gaze is identified as exceeding the specified time, the processor 240 may control the 3x3 filters 805, 810, and 815 and/or the 1x1 filters 820, 825, and 830 to be in the off state one by one.

In an embodiment, when the user's gaze is detected (e.g., YES in operation 1005), or when it is identified that the

state of no detection of the user's gaze does not exceed the specified time (e.g., NO in operation 1010), the processor 240 may select a second number of filters among the plurality of filters (e.g., the plurality of filters 805, 810, 815, 820, 825, and 830 in FIG. 8) related to image quality improvement in operation 1035. For example, when the user's gaze is detected, or when it is identified that the state of no detection of the user's gaze does not exceed the specified time, the processor 240 may recognize the same as a situation in which visibility is highly important or the user is using the electronic device 101, and select the second number of filters. In operation 1040, the processor 240 may perform image processing on the at least some pixels satisfying the specified similarity condition among the plurality of pixels by using the selected second number of filters.

In an embodiment, the second number may be greater than the first number, or equal to the number of the plurality of filters. For example, when it is identified that the state in which the user's gaze is detected exceeds a specified time, the processor 240 may recognize the same as a situation in which importance of visibility is high, and when it is identified that a characteristic of an application indicates that the application requires high image quality, the processor 240 may perform image processing on at least some pixels satisfying the specified similarity condition among the plurality of pixels, by using the second number of filters which is larger than the first number or equal to the number of the plurality of filters, thereby sharpening an edge region in the image and outputting a high-quality image.

In an embodiment, although not illustrated, by repeatedly performing operations 1010, 1015, 1020, and 1030, the number of deactivated filters may be 0 to 4 (or 0 to 6). In this case, when the user's gaze is detected, the processor 240 may control at least two deactivated 3×3 filters among the 3×3 filters 805, 810, and 815 and/or at least two deactivated 1×1 filters among the 1×1 filters 820, 825, and 830 to be in an active state one by one. In an embodiment, by controlling the at least two deactivated 3x3 filters among the 3x3 filters 805, 810, and 815 and/or at least two deactivated 1x1 filters among the 1x1 filters 820, 825, and 830 to be in the active state one by one, the processor 240 may prevent the image from being changed drastically, and provide improved visibility and readability to the user.

In FIG. 10 according to various embodiments, it has been described that, based on whether the state in which the user's gaze is detected exceeds the specified time, the plurality of filters related to image quality improvement (e.g., the plurality of filters 805, 810, 815, 820, 825, and 830 in FIG. 8) are partially controlled (e.g., activated or inactivated), but this is not limited thereto. For example, the electronic device 101 may include a wearable electronic device. The wearable electronic device may include augmented reality (AR) glasses, which are of the type of glasses, smart glasses, or head-mounted display (HMD).

In an embodiment, the electronic device 101 may include a plurality of gaze-tracking cameras (not illustrated) for tracking the user's pupil movement. The plurality of gaze-tracking cameras may include a first gaze-tracking camera and a second gaze-tracking camera. The first gaze-tracking camera may track the movement of the user's left eye, and the second gaze-tracking camera may track the movement of the user's right eye. The processor 240 may detect the user's pupils (e.g., the left and right eyes) through the plurality of gaze tracking cameras and track a direction of the user's gaze. The processor 240 may perform image processing on pixels constituting a partial region of an image, which corresponds to the direction of the user's gaze tracked in the image (or screen) displayed on the display 230 (or the image (or screen) displayed on the display in an extended reality (XR) environment), and may restrict performing image processing on pixels constituting one other partial region of the image, which does not correspond to the direction of the tracked gaze of the user.

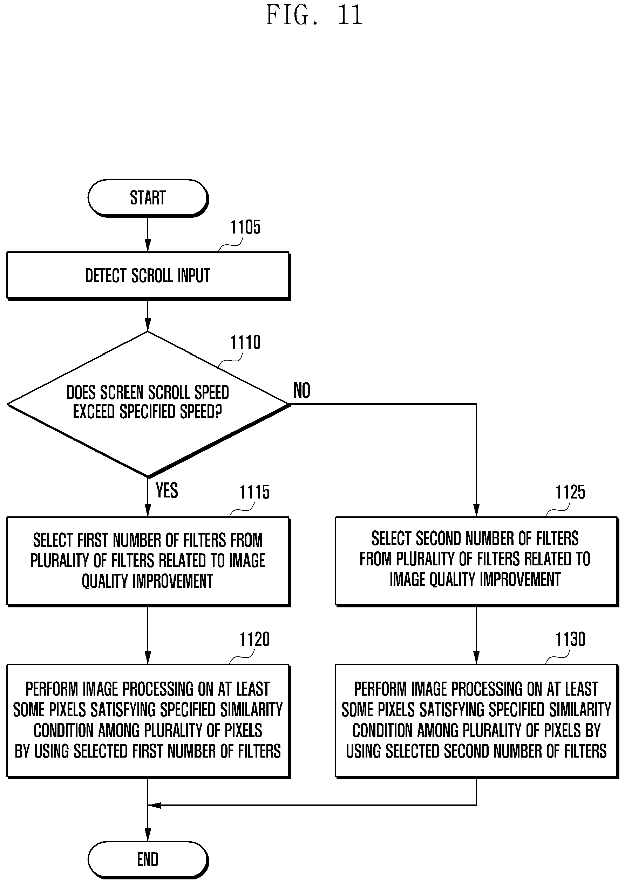

FIG. 11 is a flowchart illustrating a method of selecting at least some filters to be used for image processing, based on state information of the electronic device 101, according to an embodiment of the disclosure.

In the following embodiments, the operations in FIG. 11 may be performed in sequence, but they are not necessarily performed in sequence. For example, the order of the operations in FIG. 11 may be changed, and at least two operations may be performed in parallel.

According to an embodiment, operations 1105 to 1130 in FIG. 11 may be understood as being performed by a processor (e.g., the processor 240 in FIG. 2) of an electronic device (e.g., the electronic device 101 in FIG. 1).

FIG. 11 according to various embodiments may further specify an additional operation of operation 305 or operation 310 of FIG. 3 as described above. This is not limited thereto, and the operations in FIG. 11 may be performed as operations separate from the operations in FIG. 3.

Operations 1115 to 1130 of FIG. 11 according to various embodiments are substantially the same as operations 910 to 925 of FIG. 9 described above, and thus, for a detailed description thereof, reference is made to the description of FIG. 9.

In an embodiment, the state information of the electronic device 101 in FIG. 11 may include information related to detection of a user input.

Referring to FIG. 11, the processor 240 may detect a scroll input in operation 1105. For example, the processor 240 may detect a scroll input by an object. For example, the object may include the user's hand or an electronic pen. The processor 240 may detect a scroll input, based on a touch input by the object. This is not limited thereto, and the processor 240 may detect a scroll input from a button disposed in at least a partial region of a housing of the electronic pen.

In an embodiment, the processor 240 may identify whether the screen scroll speed exceeds a specified speed in operation 1110.

For example, the processor 240 may identify whether the screen scroll speed exceeds the specified speed, based on detection of a user input (e.g., scroll input) moving from a first touch position to a second touch position of a display (e.g., the display 230 in FIG. 2).

In an embodiment, when it is identified that the screen scroll speed exceeds the specified speed (e.g., YES in operation 1110), the processor 240 may select a first number of filters from among multiple filters related to image quality improvement (e.g., the plurality of filters 805, 810, 815, 820, 825, and 830 in FIG. 8) in operation 1115. When the screen scroll speed exceeds the specified speed, a screen displayed on the display 230 may be scrolled rapidly. In this case, the processor 240 may recognize the same as a situation in which importance of visibility is low (e.g., a situation in which clear image out is not required), and deactivate at least two 1x1 filters among the three 1x1 filters 820, 825, and 830 related to image quality to be in the off state (e.g., control at least two 1x1 filters to be in the off state). However, this is not limited thereto. For example, the processor 240 may deactivate at least two of the 3×3 filters 805, 810, and 815 related to image operation (e.g., control at least two 3x3 filters to be in the off state) among a plurality of filters (e.g., the plurality of filters 805, 810, 815, 820, 825, and 830 in FIG. 8).

In an embodiment, the processor 240 may perform image processing on at least some pixels satisfying a specified similarity condition among a plurality of pixels, by using the selected first number of filters in operation 1120. For example, the processor 240 may apply the selected first number of filters to the at least some pixels satisfying the specified similarity condition among the plurality of pixels.

In an embodiment, the at least some pixels satisfying the specified similarity condition among the plurality of pixels may be pixels corresponding to the edge region that has been described in operation 310 of FIG. 3 above.

In an embodiment, when it is identified that the screen scroll speed does not exceed the specified speed (e.g., NO in operation 1110), the processor 240 may select a second number of filters among the plurality of filters related to image quality improvement (e.g., the plurality of filters 805, 810, 815, 820, 825, and 830 in FIG. 8) in operation 1125. For example, when the screen scroll speed does not exceed the specified speed, the screen displayed on the display 230 may be scrolled slower than the screen displayed on the display 230 when the screen scroll speed exceeds the specified speed. Based on this, the processor 240 may recognize the same as a situation in which the importance of visibility is high (e.g., a situation in which clear image output is required), and select the second number of filters. The processor 240 may perform image processing on the at least some pixels satisfying the specified similarity condition among the plurality of pixels by using the selected second number of filters in operation 1130. For example, the processor 240 may apply the selected second number of filters to the at least some pixels satisfying the specified similarity condition among the plurality of pixels.

In an embodiment, the second number may be greater than the first number, or equal to the number of the plurality of filters. For example, when it is identified that the screen scroll speed does not exceed the specified speed, the processor 240 may recognize the same as a situation in which importance of visibility is high, and perform image processing on the at least some pixels satisfying the specified similarity condition among the plurality of pixels by using the second number of filters, which is larger than the first number or equal to the number of the plurality of filters, so as to sharpen an edge region in the image and output a high-quality image.

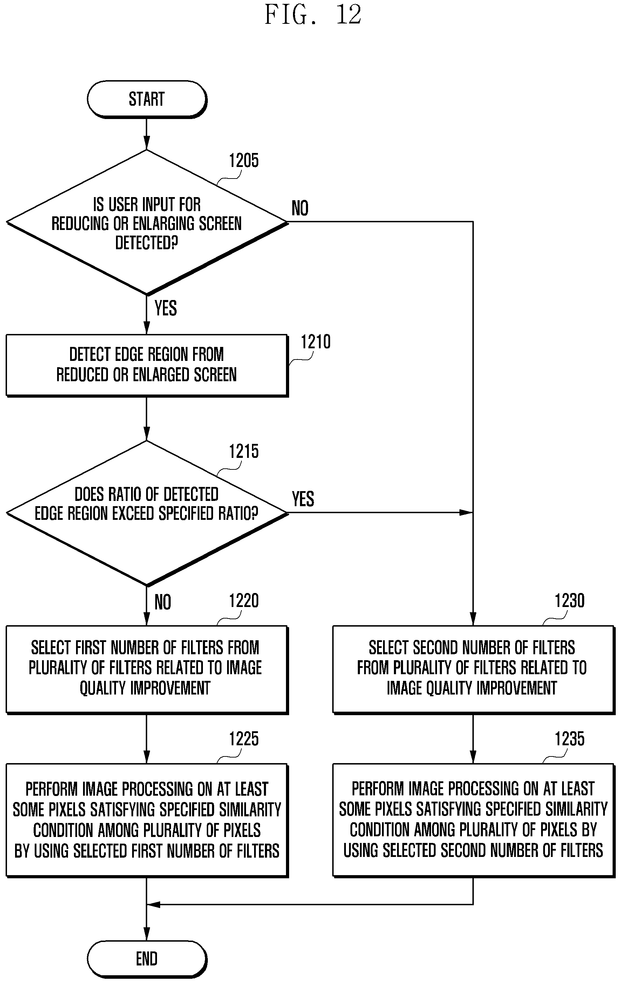

FIG. 12 is a flowchart illustrating a method of selecting at least some filters to be used for image processing, based on state information of an electronic device 101 according to an embodiment of the disclosure.

In the following embodiment, the operations in FIG. 12 may be performed in sequence, but are not necessarily performed in sequence. For example, the order of the operations in FIG. 12 may be changed, and at least two operations may be performed in parallel.

According to an embodiment, operations 1205 to 1235 in FIG. 12 may be understood as being performed by the processor (e.g., the processor 240 in FIG. 2) of an electronic device (e.g., the electronic device 101 in FIG. 1).

FIG. 12 according to various embodiments may further specify an additional operation of operation 305 of FIG. 3 or operation 310 as described above. This is not limited thereto, and the operations in FIG. 12 may be performed as operations separate from the operations in FIG. 3.

Operations 1220 to 1235 in FIG. 12 according to various embodiments are substantially the same as operations 910 to 925 in FIG. 9, and thus, for a detailed description thereof, reference may be made to the description of FIG. 9.

In an embodiment, state information of the electronic device 101 in FIG. 12 may include information related to detection of a user input.

Referring to FIG. 12, the processor 240 may identify whether a user input for reducing or enlarging a screen is detected in operation 1205. For example, the processor 240 may identify whether a user input for reducing or enlarging the screen displayed on the display (e.g., the display 230 in FIG. 2) is detected.

In an embodiment, when it is identified that a user input for reducing or enlarging the screen is detected (e.g., YES in operation 1205), the processor 240 may detect an edge region in the reduced or enlarged screen in operation 1210. For example, as described in operation 305 and operation 310 in FIG. 3 above, the processor 240 may identify at least some pixels satisfying a specified similarity condition among a plurality of pixels, based on a similarity between the plurality of pixels included in the reduced or enlarged image. For example, the at least some pixels satisfying the specified similarity condition among the plurality of pixels may be pixels corresponding to the edge region.

In an embodiment, the processor 240 may identify whether a ratio of the detected edge region exceeds a specified ratio in operation 1215. For example, the processor 240 may identify whether the ratio of the edge region to the whole frame of the reduced or enlarged image exceeds the specified ratio. When it is not identified that the ratio of the detected edge region exceeds the designated ratio (e.g., NO in operation 1215), the processor 240 may select a first number of filters among a plurality of filters related to the image quality improvement (e.g., the plurality of filters 805, 810, 815, 820, 825, and 830 in FIG. 8) in operation 1220. The processor 240 may perform image processing on the at least some pixels satisfying the specified similarity condition among the plurality of pixels by using the selected first number of filters in operation 1225. For example, the processor 240 may apply the selected first number of filters to the at least some pixels satisfying the specified similarity condition among the plurality of pixels.

In an embodiment, when it is identified that the ratio of the detected edge region exceeds the specified ratio (e.g., YES in operation 1215), the processor 240 may select a second number of filters among the plurality of filters related to image quality improvement (e.g., the plurality of filters 805, 810, 815, 820, 825, and 830 in FIG. 8) in operation 1230. In operation 1435, the processor 240 may perform image processing on the at least some pixels satisfying the specified similarity condition among the plurality of pixels, by using the selected second number of filters. For example, the processor 240 may apply the selected second number of filters to the at least some pixels satisfying the specified similarity condition among the plurality of pixels.

In an embodiment, the second number may be greater than the first number, or equal to the number of the plurality of filters. For example, when it is identified that the ratio of the detected edge region exceeds the specified ratio, the processor 240 may perform image processing on the at least some pixels satisfying the specified similarity condition among the plurality of pixels, by using the second number of filters, which is greater than the first number or equal to the number of the plurality of filters, so as to make the edge region in the image clear and output a high-quality image.

In an embodiment, when it is identified that a user input for reducing or enlarging the screen is not detected (e.g., NO in operation 1205), the processor 240 may perform the above-described operations 1230 and 1235.

In various embodiments, although not illustrated, the processor 240 may not perform an operation of analyzing a similarity between the plurality of pixels included in an image, depending on the type of an application. For example, in the case of an image that needs to be updated, such as a game application, a photo application, an application related to video reproduction, and/or an SNS application, a lot of edge regions may exist. Accordingly, a time required for the processor 240 to perform the operation of analyzing the similarity between the plurality of pixels included in the image may be long, and current consumption may be large. Based on this, the processor 240 may not analyze the similarity between the plurality of pixels included in the image, which is displayed as the game application, the photo application, the application related to video reproduction, or the SNS application is executed.

This is not limited thereto, and the operation of analyzing the similarity between the plurality of pixels included in the image may or may not be performed, depending on a display mode of the application. For example, when one of a plurality of images is displayed on a full screen of the display 230 after executing the photo application, the processor 240 may not analyze a similarity between a plurality of pixels included in the image. After the photo application is executed, when the plurality of images is displayed as thumbnail images, the processor 240 may analyze a similarity between a plurality of pixels included in the thumbnail image. As another example, in the case where a video is reproduced through the video reproduction application, if the video is displayed in the full screen of the display 230, the processor 240 may not analyze a similarity between a plurality of pixels included in the video. When the video is displayed on a portion of the display 230 in a picture-in-picture (PIP) mode, the processor 240 may analyze a similarity between a plurality of pixels included in the video displayed in the PIP mode.

In various embodiments in FIG. 7 to FIG. 12, the electronic device 101 may partially activate a plurality of filters related to image quality improvement, based on state information of the electronic device 101, and perform image processing on at least among pixels satisfying a specified similarity condition among a plurality of pixels included in an image, by using the activated filters, thereby sharpening a predetermined region (e.g., dot region and/or edge region) in the image and outputting a high-quality image.

An image processing method of the electronic device 101 according to an embodiment of the disclosure may include an operation of identifying a similarity between a plurality of pixels included in an image. The image processing method of the electronic device 101 according to an embodiment may include an operation of controlling the artificial intelligence model driving module 245 so as to apply a plurality of filters related to image quality improvement of the image to at least some pixels satisfying a specified similarity condition among the plurality of pixels, based on the identified similarity between the plurality of pixels of the image. The image processing method of the electronic device 101 according to an embodiment may include an operation of controlling the artificial intelligence model driving module 245 so as to restrict applying the plurality of filters to at least some other pixels not satisfying the specified similarity condition among the plurality of pixels.

The at least some pixels satisfying the specified similarity condition among the plurality of pixels according to an embodiment may be pixels corresponding to an edge region. The at least some other pixels not satisfying the specified similarity condition among the plurality of pixels according to an embodiment may be pixels not corresponding to the edge

region.

The plurality of filters according to an embodiment may include a plurality of first filters and a plurality of second filters. The plurality of first filters according to an embodiment may include filters related to image operation. The plurality of second filters according to an embodiment may include filters related to image quality.

The operation of applying the plurality of filters related to image quality improvement of the image to the at least some pixels satisfying the specified similarity condition according to an embodiment may include an operation of selecting at least some filters from the plurality of filters related to image quality improvement, based on state information of the electronic device 101. The operation of applying the plurality of filters related to image quality improvement of the image to the at least some pixels satisfying the specified similarity condition according to an embodiment may include an operation of applying the selected at least some filters to the at least some pixels satisfying the specified similarity condition among the plurality of pixels.

The state information of the electronic device 101 according to an embodiment may include at least one of information related to a remaining capacity of the battery 189 of the electronic device 101, information related to a characteristic of an application displayed on the display 230, information related to an operating state of the electronic device 101, information related to detection of a gaze of a user of the electronic device 101, or information related to detection of a user input.

The image processing method of the electronic device 101 according to an embodiment may include an operation of identifying whether the state information of the electronic device (101) satisfies a specified condition. The image processing method of the electronic device 101 according to an embodiment may include, when the state information of the electronic device 101 satisfies the specified condition, an operation of controlling the artificial intelligence model driving module 245 so as to select a first number of filters from the plurality of filters and apply the selected first number of filters to the at least some pixels satisfying the specified similarity condition among the plurality of pixels. The image processing method of the electronic device 101 according to an embodiment may include, when the state information of the electronic device 101 satisfies the specified condition, an operation of controlling the artificial intelligence model driving module 245 so as to restrict applying the plurality of filters to the at least some other pixels not satisfying the specified similarity condition among the plurality of pixels. The image processing method of the electronic device 101 according to an embodiment may include, when the state information of the electronic device (101) does not satisfy the specified condition, an operation of selecting a second number of filters among the plurality of filters. The image processing method of the electronic device 101 according to an embodiment may include an operation of applying the selected second number of filters to the at least some pixels satisfying the specified similarity condition among the plurality of pixels.

The case in which the state information of the electronic device 101 satisfies the specified condition according to an embodiment may include at least one of a case in which the remaining capacity of the battery 189 is identified as being less than or equal to a specified capacity, based on the information related to the remaining capacity of the battery 189 of the electronic device 101, a case in which the application is identified as an application for which a high image quality is not required, based on the information related to the characteristic of the application, a case in which the electronic device 101 is identified as operating in a power saving state, based on the information related to the operating state of the electronic device 101, a case where a state in which the user's gaze is detected is identified as being less than or equal to a specified time, based on the information related to detection of the gaze of the user of the electronic device 101, or a case in which a screen scroll speed is identified as exceeding a specified speed, based on the information related to detection of the user input.

The case in which the state information of the electronic device (101) does not satisfy the specified condition according to an embodiment may include at least one of a case in which the remaining capacity of the battery 189 is identified as exceeding the specified capacity, based on the information related to a remaining capacity of the battery 189 of the electronic device (101), a case in which the application is identified as an application for which a high image quality is required, based on the information related to the characteristic of the application, a case in which the electronic device 101 is identified as not operating in the power saving state, based on the information related to the operating state of the electronic device 101, a case where a state in which the user's gaze is detected is identified as exceeding the specified time, based on the information related to detection of the gaze of the user of the electronic device 101, or a case in which a screen scroll speed is identified as being less than or equal to the specified speed, based on the information related to detection of the user input.

The operation of applying the selected at least some filters to the at least some pixels satisfying the specified similarity condition among the plurality of pixels according to an embodiment may include, when a user input for reducing or enlarging a screen is detected based on the information related to the detection of the user input, an operation of detecting an edge region from the reduced or enlarged screen. The operation of applying the selected at least some filters to the at least some pixels satisfying the specified similarity condition among the plurality of pixels according to an embodiment may include, when a ratio of the detected edge region does not exceed a specified ratio, an operation of selecting a first number of filters from the plurality of filters, and applying the selected first number of filters to the at least some pixels satisfying the specified similarity condition among the plurality of pixels. The operation of applying the selected at least some filters to the

at least some pixels satisfying the specified similarity condition among the plurality of pixels according to an embodiment may include, when the ratio of the detected edge region exceeds the specified ratio, an operation of selecting a second number of filters from the plurality of filters, and applying the selected second number of filters to the at least some pixels satisfying the specified similarity condition among the plurality of pixels.

The second number according to an embodiment may be greater than the first number, or equal to the number of the plurality of filters.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:

   a processor (240); and
   memory (220) storing instructions,
   wherein the instructions, when executed by the processor (240), cause the electronic device (101) to:

      identify a similarity between a plurality of pixels included in an image;
      based on the identified similarity between the plurality of pixels, control an artificial intelligence model driving module (245) so as to apply a plurality of filters related to quality improvement of the image to at least some pixels satisfying a specified similarity condition among the plurality of pixels; and
      control the artificial intelligence model driving module (245) so as to restrict applying the plurality of filters to at least some other pixels not satisfying the specified similarity condition among the plurality of pixels.

2. The electronic device of claim 1, wherein the at least some pixels satisfying the specified similarity condition among the plurality of pixels are pixels corresponding to an edge region,

   wherein the at least some other pixels not satisfying the specified similarity condition among the plurality of pixels are pixels not corresponding to the edge region,
   wherein the plurality of filters comprises a plurality of first filters and a plurality of second filters,
   wherein the plurality of first filters comprises filters related to image operation, and
   wherein the plurality of second filters comprises filters related to image quality.

3. The electronic device of claim 1 or claim 2, wherein the instructions, when executed by the processor (240), cause the electronic device (101) to:

   select at least some filters from the plurality of the filters, based on state information of the electronic device (101); and
   apply the selected at least some filters to the at least some pixels satisfying the specified similarity condition among the plurality of pixels,
   wherein the state information of the electronic device (101) comprises at least one of information related to a remaining capacity of a battery (189) of the electronic device (101), information related to a characteristics of an application being displayed on a display (230), information related to an operating state of the electronic device (101), information related to detection of a gaze of a user of the electronic device (101), or information related to detection of a user input.

4. The electronic device of claim 3, wherein the instructions, when executed by the processor (240), cause the electronic device (101) to:

   identify whether the state information of the electronic device (101) satisfies a specified condition;
   in a case in which the state information of the electronic device (101) satisfies the specified condition, control the artificial intelligence model driving module (245) so as to select a first number of filters from the plurality of filters and apply the selected first number of filters to the at least some pixels satisfying the specified similarity condition among the plurality of pixels, and
   control the artificial intelligence model driving module (245) so as to restrict applying the plurality of filters to the at least some other pixels not satisfying the specified similarity condition among the plurality of pixels; and
   in a case in which the state information of the electronic device (101) does not satisfy the specified condition, control the artificial intelligence model driving module (245) so as to select a second number of filters from the plurality of filters and apply the selected second number of filters to the at least some pixels satisfying the specified similarity condition among the plurality of pixels.

5. The electronic device of claim 4, wherein the case in which the state information of the electronic device (101) satisfies the specified condition comprises at least one of a case in which the remaining capacity of the battery (189) is identified as being less than or equal to a specified capacity, based on the information related to the remaining capacity of the battery (189), a case in which the application is identified as an application for which a high image quality is not required, based on the information related to the characteristic of the application, a case in which the electronic device (101) is identified as operating in a power saving state, based on the information related to the operating state of the

electronic device (101), a case where a state in which the user's gaze is detected is identified as being less than or equal to a specified time, based on the information related to detection of the gaze of the user of the electronic device (101), or a case in which a screen scroll speed is identified as exceeding a specified speed, based on the information related to detection of the user input, and
wherein the case in which the state information of the electronic device (101) does not satisfy the specified condition comprises at least one of a case in which the remaining capacity of the battery (189) is identified as exceeding the specified capacity, based on the information related to the remaining capacity of the battery (189) of the electronic device (101), a case in which the application is identified as an application for which a high image quality is required, based on the information related to the characteristic of the application, a case in which the electronic device (101) is identified as not operating in the power saving state, based on the information related to the operating state of the electronic device (101), a case where a state in which the user's gaze is detected is identified as exceeding the specified time, based on the information related to detection of the gaze of the user of the electronic device (101), or a case in which the screen scroll speed is identified as being less than or equal to the specified speed, based on the information related to detection of the user input.

**6.** The electronic device of any one of claims 3 to 5, wherein the instructions, when executed by the processor (240), cause the electronic device (101) to:

in case that a user input for reducing or enlarging a screen is detected based on the information related to detection of the user input, detect an edge region from the reduced or enlarged screen;
in case that a ratio of the detected edge region does not exceed a specified ratio, select a first number of filters from the plurality of filters, and apply the selected first number of filters to the at least some pixels satisfying the specified similarity condition among the plurality of pixels; and
in case that the ratio of the detected edge region exceeds the specified ratio, select a second number of filters from the plurality of filters, and apply the selected second number of filters to the at least some pixels satisfying the specified similarity condition among the plurality of pixels.

**7.** The electronic device of any one of claims 4 to 6, wherein the second number is greater than the first number, or equal to a number of the plurality of filters.

**8.** The electronic device of any one of claims 1 to 7, further comprising a display (230),

wherein the image comprises an upscaled image, and
wherein the instructions, when executed by the processor (240), cause the electronic device (101) to:

generate a second image by merging the upscaled image and a feature map based on the at least some pixels to which the plurality of filters is applied and the at least some other pixels to which application of the plurality of filters is restricted; and
display the generated second image on the display (230).

**9.** The electronic device of any one of claims 1 to 7, further comprising a display (230),

wherein the image comprises an image that is not upscaled, and
wherein the instructions, when executed by the processor (240), cause the electronic device (101) to:

generate a second image by merging the image and a feature map based on the at least some pixels to which the plurality of filters is applied and the at least some other pixels to which application of the plurality of filters is restricted, and upscale the generated second image; and
display the upscaled second image on the display (230).

**10.** A method of processing an image by an electronic device (101), the method comprising:

identifying a similarity between a plurality of pixels included in an image;
based on the identified similarity between the plurality of pixels, controlling an artificial intelligence model driving module (245) so as to apply a plurality of filters related to quality improvement of the image to at least some pixels satisfying a specified similarity condition among the plurality of pixels; and
controlling the artificial intelligence model driving module (245) so as to restrict applying the plurality of filters to at least some other pixels not satisfying the specified similarity condition among the plurality of pixels.

**11.** The method of claim 10, wherein the at least some pixels satisfying the specified similarity condition among the plurality of pixels are pixels corresponding to an edge region,

wherein the at least some other pixels not satisfying the specified similarity condition among the plurality of pixels are pixels not corresponding to the edge region,
wherein the plurality of filters comprises a plurality of first filters and a plurality of second filters,
wherein the plurality of first filters comprises filters related to image operation, and
wherein the plurality of second filters comprises filters related to image quality.

**12.** The method of claim 10 or claim 11, wherein the applying of the plurality of filters related to image quality improvement of the image to the at least some pixels satisfying the specified similarity condition comprises:

selecting at least some filters from the plurality of filters, based on state information of the electronic device (101); and
applying the selected at least some filters to the at least some pixels satisfying the specified similarity condition among the plurality of pixels, and
wherein the state information of the electronic device (101) comprises at least one of information related to a remaining capacity of a battery (189) of the electronic device (101), information related to a characteristic of an application being displayed on a display (230), information related to an operating state of the electronic device (101), information related to detection of a gaze of a user of the electronic device (101), or information related to detection of a user input.

**13.** The method of claim 12, further comprising:

identifying whether the state information of the electronic device (101) satisfies a specified condition;
in a case in which the state information of the electronic device (101) satisfies the specified condition, performing:
control of the artificial intelligence model driving module (245) so as to select a first number of filters from the plurality of filters and apply the selected first number of filters to the at least some pixels satisfying the specified similarity condition among the plurality of pixels; and
control of the artificial intelligence model driving module (245) so as to restrict applying the plurality of filters to the at least some other pixels not satisfying the specified similarity condition among the plurality of pixels; and
in a case in which the state information of the electronic device (101) does not satisfy the specified condition, controlling the artificial intelligence model driving module (245) so as to select a second number of filters among the plurality of filters and apply the selected second number of filters to the at least some pixels satisfying the specified similarity condition among the plurality of pixels,
wherein the second number is greater than the first number, or equal to a number of the plurality of filters.

**14.** The method of claim 13, wherein the case in which the state information of the electronic device (101) satisfies the specified condition comprises at least one of a case in which the remaining capacity of the battery (189) is identified as being less than or equal to a specified capacity, based on the information related to the remaining capacity of the battery (189) of the electronic device (101), a case in which the application is identified as an application for which a high image quality is not required, based on the information related to the characteristic of the application, a case in which the electronic device (101) is identified as operating in a power saving state, based on the information related to the operating state of the electronic device (101), a case where a state in which the user's gaze is detected is identified as being less than or equal to a specified time, based on the information related to detection of the gaze of the user of the electronic device (101), or a case in which a screen scroll speed is identified as exceeding a specified speed, based on the information related to detection of the user input, and
wherein the case in which the state information of the electronic device (101) does not satisfy the specified condition comprises at least one of a case in which the remaining capacity of the battery (189) is identified as exceeding the specified capacity, based on the information related to the remaining capacity of the battery (189) of the electronic device (101), a case in which the application is identified as an application for which a high image quality is required, based on the information related to the characteristic of the application, a case in which the electronic device (101) is identified as not operating in the power saving state, based on the information related to the operating state of the electronic device (101), a case where a state in which the user's gaze is detected is identified as exceeding the specified time, based on the information related to detection of the gaze of the user of the electronic device (101), or a case in which the screen scroll speed is identified as being less than or equal to the specified speed, based on the information related to detection of the user input.

**15.** The method of any one of claims 12 to 14, wherein the applying of the selected at least some filters to the at least some pixels satisfying the specified similarity condition among the plurality of pixels comprises:

in case that a user input for reducing or enlarging a screen is detected based on the information related to detection of the user input, detecting an edge region from the reduced or enlarged screen;
in case that a ratio of the detected edge region does not exceed a specified ratio, selecting a first number of filters from the plurality of filters, and applying the selected first number of filters to the at least some pixels satisfying the specified similarity condition among the plurality of pixels; and
in case that the ratio of the detected edge region exceeds the specified ratio, selecting a second number of filters from the plurality of filters, and applying the selected second number of filters to the at least some pixels satisfying the specified similarity condition among the plurality of pixels, and
wherein the second number is greater than the first number, or equal to a number of the plurality of filters.

FIG. 1

101
ELECTRONIC DEVICE
100
INPUT MODULE
150
SOUND OUTPUT MODULE
155
DISPLAY MODULE
160
MEMORY
130
VOLATILE MEMORY
132
NON-VOLATILE MEMORY
134
INTERNAL MEMORY
136
EXTERNAL MEMORY
138
PROGRAM
140
APPLICATIONS
146
MIDDLEWARE
144
OPERATING SYSTEM
142
BATTERY
189
PROCESSOR
120
MAIN PROCESSOR
121
AUXILIARY PROCESSOR
123
COMMUNICATION MODULE
190
WIRELESS COMMUNICATION MODULE
192
WIRED COMMUNICATION MODULE
194
POWER MANAGEMENT MODULE
188
SUBSCRIBER IDENTIFICATION MODULE
196
ANTENNA MODULE
197
SECOND NETWORK
199
ELECTRONIC DEVICE
104
FIRST NETWORK
198
AUDIO MODULE
170
SENSOR MODULE
176
INTERFACE
177
CONNECTION TERMINAL
178
ELECTRONIC DEVICE
102
SERVER
108
HAPTIC MODULE
179
CAMERA MODULE
180

FIG. 2

101
240
210
230
PROCESSOR
COMMUNICATION CIRCUIT
DISPLAY
UPSCALE MODULE
241
220
MEMORY
IMAGE ANALYSIS MODULE
243
ARTIFICIAL INTELLIGENCE MODEL
221
ARTIFICIAL INTELLIGENCE MODEL DRIVING MODULE
245
IMAGE MERGING MODULE
247

FIG. 3

START
IDENTIFY SIMILARITY BETWEEN PLURALITY OF PIXELS INCLUDED IN IMAGE
305
CONTROL ARTIFICIAL INTELLIGENCE MODEL DRIVING MODULE SO AS TO APPLY PLURALITY OF FILTERS RELATED TO IMAGE QUALITY IMPROVEMENT TO AT LEAST SOME PIXELS SATISFYING SPECIFIED SIMILARITY CONDITION AMONG PLURALITY OF PIXELS, BASED ON IDENTIFIED SIMILARITY BETWEEN PLURALITY OF PIXELS
310
CONTROL ARTIFICIAL INTELLIGENCE MODEL DRIVING MODULE SO AS TO RESTRICT APPLYING PLURALITY OF FILTERS TO AT LEAST SOME OTHER PIXELS NOT SATISFYING SPECIFIED SIMILARITY CONDITION AMONG PLURALITY OF PIXELS
315
END

FIG. 4

405

241 UPSCALE MODULE

410

243 IMAGE ANALYSIS MODULE

415

420

425

245 ARTIFICIAL INTELLIGENCE MODEL DRIVING MODULE

247 IMAGE MERGING MODULE

430

FIG. 5

510
Current Pixel $(Pixel_{x,y})$ 515
n-th pixel in the Filter $(Pixel_{x+i,y+j})$ 520
NEIGHBORING PIXEL OF N-TH PIXEL 525
$(Pixel_{x+(i-1),y+(j-1)} \sim Pixel_{x+(i+1),y+(j+1)})$
DIFFERENCE FROM NEIGHBORING PIXEL 530

FIG. 6

615
625
655
660
23°
23°
(610)
(650)

FIG. 7

START
SELECT AT LEAST SOME FILTERS TO BE USED FOR IMAGE PROCESSING FROM PLURALITY OF FILTERS RELATED TO IMAGE QUALITY IMPROVEMENT, BASED ON STATE INFORMATION OF ELECTRONIC DEVICE
705
PERFORM IMAGE PROCESSING ON AT LEAST SOME PIXELS SATISFYING SPECIFIED SIMILARITY CONDITION AMONG PLURALITY OF PIXELS BY USING SELECTED AT LEAST SOME FILTERS
710
END

FIG. 8

245
ARTIFICIAL INTELLIGENCE MODEL DRIVING MODULE
3x3 Convolution Filter
Layer 0
805
3x3 Convolution Filter
Layer 1
810
3x3 Convolution Filter
Layer 2
815
1x1 Convolution Filter
Layer 3
820
1x1 Convolution Filter
Layer 4
825
1x1 Convolution Filter
Layer 5
830

FIG. 9

START
905
DOES STATE INFORMATION
OF ELECTRONIC DEVICE SATISFY
SPECIFIED CONDITION?
NO
YES
910
SELECT FIRST NUMBER OF FILTERS FROM
PLURALITY OF FILTERS RELATED TO IMAGE
QUALITY IMPROVEMENT
920
SELECT SECOND NUMBER OF
FILTERS FROM PLURALITY OF FILTERS
RELATED TO IMAGE QUALITY IMPROVEMENT
915
PERFORM IMAGE PROCESSING ON AT LEAST
SOME PIXELS SATISFYING SPECIFIED SIMILARITY
CONDITION AMONG PLURALITY OF PIXELS BY
USING SELECTED FIRST NUMBER OF FILTERS
925
PERFORM IMAGE PROCESSING ON AT LEAST
SOME PIXELS SATISFYING SPECIFIED SIMILARITY
CONDITION AMONG PLURALITY OF PIXELS BY
USING SELECTED SECOND NUMBER OF FILTERS
END

FIG. 10

START
1005
IS USER'S GAZE DETECTED?
YES
NO
1010
DOES STATE IN WHICH USER'S GAZE IS NOT DETECTED EXCEED SPECIFIED TIME?
NO
YES
1015
SELECT FIRST NUMBER OF FILTERS BY PARTIALLY DEACTIVATING PLURALITY OF FILTERS RELATED TO IMAGE QUALITY IMPROVEMENT
1020
PERFORM IMAGE PROCESSING ON AT LEAST SOME PIXELS SATISFYING SPECIFIED SIMILARITY CONDITION AMONG PLURALITY OF PIXELS BY USING SELECTED FIRST NUMBER OF FILTERS
1030
INITIALIZE TIME RELATED TO STATE OF NO DETECTION OF USER'S GAZE
1025
IS NUMBER OF DEACTIVATED FILTERS EQUAL TO NUMBER OF DESIGNATED FILTERS?
NO
YES
1035
SELECT SECOND NUMBER OF FILTERS FROM PLURALITY OF FILTERS RELATED TO IMAGE QUALITY IMPROVEMENT
1040
PERFORM IMAGE PROCESSING ON AT LEAST SOME PIXELS SATISFYING SPECIFIED SIMILARITY CONDITION AMONG PLURALITY OF PIXELS BY USING SELECTED SECOND NUMBER OF FILTERS
END

FIG. 11

START
1105
DETECT SCROLL INPUT
1110
DOES SCREEN SCROLL SPEED EXCEED SPECIFIED SPEED?
NO
YES
1115
SELECT FIRST NUMBER OF FILTERS FROM PLURALITY OF FILTERS RELATED TO IMAGE QUALITY IMPROVEMENT
1125
SELECT SECOND NUMBER OF FILTERS FROM PLURALITY OF FILTERS RELATED TO IMAGE QUALITY IMPROVEMENT
1120
PERFORM IMAGE PROCESSING ON AT LEAST SOME PIXELS SATISFYING SPECIFIED SIMILARITY CONDITION AMONG PLURALITY OF PIXELS BY USING SELECTED FIRST NUMBER OF FILTERS
1130
PERFORM IMAGE PROCESSING ON AT LEAST SOME PIXELS SATISFYING SPECIFIED SIMILARITY CONDITION AMONG PLURALITY OF PIXELS BY USING SELECTED SECOND NUMBER OF FILTERS
END

FIG. 12

START
1205
IS USER INPUT FOR REDUCING OR ENLARGING SCREEN DETECTED?
NO
YES
1210
DETECT EDGE REGION FROM REDUCED OR ENLARGED SCREEN
1215
DOES RATIO OF DETECTED EDGE REGION EXCEED SPECIFIED RATIO?
YES
NO
1220
SELECT FIRST NUMBER OF FILTERS FROM PLURALITY OF FILTERS RELATED TO IMAGE QUALITY IMPROVEMENT
1230
SELECT SECOND NUMBER OF FILTERS FROM PLURALITY OF FILTERS RELATED TO IMAGE QUALITY IMPROVEMENT
1225
PERFORM IMAGE PROCESSING ON AT LEAST SOME PIXELS SATISFYING SPECIFIED SIMILARITY CONDITION AMONG PLURALITY OF PIXELS BY USING SELECTED FIRST NUMBER OF FILTERS
1235
PERFORM IMAGE PROCESSING ON AT LEAST SOME PIXELS SATISFYING SPECIFIED SIMILARITY CONDITION AMONG PLURALITY OF PIXELS BY USING SELECTED SECOND NUMBER OF FILTERS
END

## INTERNATIONAL SEARCH REPORT

International application No. **PCT/KR2024/017309**

**A. CLASSIFICATION OF SUBJECT MATTER**

**G06T 1/20**(2006.01)i; **G06T 5/20**(2006.01)i; **G06V 10/74**(2022.01)i; **G06F 1/3231**(2019.01)i; **G06F 1/3212**(2019.01)i; **G06F 3/01**(2006.01)i; **G06F 3/0487**(2013.01)i; **G06T 3/40**(2006.01)i; **G06T 11/60**(2006.01)i

According to International Patent Classification (IPC) or to both national classification and IPC

**B. FIELDS SEARCHED**

Minimum documentation searched (classification system followed by classification symbols)

G06T 1/20(2006.01); G06T 3/40(2006.01); G06T 7/00(2006.01); H04N 1/393(2006.01); H04N 19/80(2014.01); H04N 19/85(2014.01); H04N 5/21(2006.01); H04N 5/232(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이미지(image), 픽셀(pixel), 유사도(similarity), 인공 지능(artificial intelligence), 해상도(resolution), 필터(filter), 업스케일링(upscaling)

**C. DOCUMENTS CONSIDERED TO BE RELEVANT**

| Category* | Citation of document, with indication, where appropriate, of the relevant passages | Relevant to claim No. |
|---|---|---|
| A | JP 2010-178301 A (OLYMPUS CORP.) 12 August 2010 (2010-08-12)<br>See claim 1. | 1-15 |
| A | JP 2013-218523 A (DAINIPPON PRINTING CO., LTD.) 24 October 2013 (2013-10-24)<br>See claims 1-4. | 1-15 |
| A | KR 10-2020-0114951 A (SAMSUNG ELECTRONICS CO., LTD.) 07 October 2020 (2020-10-07)<br>See claims 1-7. | 1-15 |
| A | JP 2014-215926 A (OMRON CORP.) 17 November 2014 (2014-11-17)<br>See claims 1-3. | 1-15 |
| A | KR 10-2006-0031914 A (C&S TECHNOLOGY CO., LTD.) 14 April 2006 (2006-04-14)<br>See claim 1. | 1-15 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2025** | **10 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/017309**

| Patent document cited in search report | Publication date (day/month/year) | Patent family member(s) | Publication date (day/month/year) |
|---|---|---|---|
| JP 2010-178301 A | 12 August 2010 | US 2010-0195926 A1 | 05 August 2010 |
| | | US 8320705 B2 | 27 November 2012 |
| JP 2013-218523 A | 24 October 2013 | JP 5891916 B2 | 23 March 2016 |
| KR 10-2020-0114951 A | 07 October 2020 | EP 3925203 A1 | 22 December 2021 |
| | | US 11216953 B2 | 04 January 2022 |
| | | US 11481907 B2 | 25 October 2022 |
| | | US 11893748 B2 | 06 February 2024 |
| | | US 2020-0311945 A1 | 01 October 2020 |
| | | US 2022-0076427 A1 | 10 March 2022 |
| | | US 2023-0017812 A1 | 19 January 2023 |
| | | WO 2020-197018 A1 | 01 October 2020 |
| JP 2014-215926 A | 17 November 2014 | CN 104123717 A | 29 October 2014 |
| | | CN 104123717 B | 04 August 2017 |
| | | EP 2797051 A2 | 29 October 2014 |
| | | EP 2797051 A3 | 18 November 2015 |
| | | EP 2797051 B1 | 07 April 2021 |
| | | US 2014-0321748 A1 | 30 October 2014 |
| | | US 9189861 B2 | 17 November 2015 |
| KR 10-2006-0031914 A | 14 April 2006 | None | |

Form PCT/ISA/210 (patent family annex) (July 2022)